# EUROPEAN PATENT APPLICATION

(11) **EP 4 686 265 A1**
(43) Date of publication of application: **28.01.2026**
(21) Application number: 24194125.1
(22) Date of filing: 12.08.2024
(51) Int. Cl.: H04W 48/12, H04W 84/18, H04W 84/12, H04W 88/04

(54) **METHODS AND DEVICES FOR DYNAMIC SUB-GIGAHERTZ (S1G) MESH WIRELESS NETWORKS**

(30) Priority: 26.07.2024 AU 2024902331
(71) Applicant: Morse Micro Pty. Ltd., Surry Hills, NSW 2010 (AU)
(72) Inventor: Bhureddy, Pradeep Reddy, Surry Hills, NSW 2010 (AU); Bussa, Sagar, Surry Hills, NSW 2010 (AU)
(74) Representative: MERH-IP Matias Erny Reichl Hoffmann Patentanwälte PartG mbB

(57) **Abstract**

Systems and techniques are provided for performing wireless communications. In some aspects, a mesh gate includes an access point (AP) interface and a mesh interface, and can monitor a sub-gigahertz wireless radio channel for probe requests. An AP mode of the mesh gate can be activated to turn on the AP interface based on receiving a probe request from a station (STA) in a Basic Service Set (BSS). The mesh gate can wirelessly connect to and perform communications with the STA using the AP interface. The mesh gate can perform communications with one or more mesh nodes in a mesh BSS using the mesh interface, wherein the mesh gate node is configured to provide communications between the STA and the one or more mesh nodes via an interconnection between the AP interface and the mesh interface.

## Description

### CROSS-REFERENCE TO RELATED APPLICATIONS

This application claims the benefit of Australian Provisional Patent Application No. 2024/902331, filed July 26, 2024, which is hereby incorporated by reference, in its entirety and for all purposes.

### FIELD

The present disclosure generally relates to wireless communications. For example, aspects of the present disclosure are related to wireless mesh networks (WMNs) and/or dynamic sub-gigahertz (S1G) mesh networks.

### BACKGROUND

A Wireless Mesh Network (WMN) is a communication network that includes a plurality of radio nodes organized in a mesh topology. A mesh topology can be based on rich interconnections among nodes, where each node of the mesh topology is connected to one or more other nodes of the mesh topology. In the context of a WMN, a mesh topology between the plurality of radio nodes enables multiple different pathways to be taken between a source and a destination. In some examples, a WMN may typically be implemented as a low-mobility wireless ad-hoc network. Mesh infrastructure can be used to carry data over long distances by splitting each distance into a series of short hops, where intermediate nodes cooperatively pass data from one node to another by making forwarding decisions based on each intermediate node's knowledge of the network and/or the underlying mesh topology. For example, using knowledge of the network and/or underlying mesh topology, every node in the network could dynamically serve as a router for every other node.

An example of a WMN is an Institute of Electrical and Electronics Engineers (IEEE) 802.11s mesh network, where the IEEE 802.11s wireless mesh networking standard defines the interconnection between multiple wireless devices to create a Wireless Local Area Network (WLAN) mesh network. A wireless mesh network device, also known as a Mesh Station (mesh STA) or a mesh node, forms mesh links with one or more additional mesh STAs that are associated with the WMN. Using the plurality of mesh links that interconnect various pairs of mesh STAs that are included in the WMN, mesh paths can be established using an ad-hoc mobile routing protocol (e.g., a mesh path can comprise a plurality of mesh links between interconnected mesh STAs or nodes of the WMN).

The multi-hop wireless links in the mesh architecture can be used to enable the routing of packets from one node (e.g., a source node on the WMN) through one or more other nodes (e.g., intermediate nodes, also on the WMN) towards the destination node (e.g., a destination node, also on the WMN). The IEEE 802.1 1s mesh standard mandates every node in the mesh network to transmit a beacon at every beacon interval. This beacon can also be referred to as a mesh beacon, and advertises a mesh ID, mesh profile, and power save state. The IEEE 802.11s mesh beacons are intended for discovery of mesh networks and synchronization among mesh nodes when the mesh power save mode is enabled. Mesh networks operating on sub-gigahertz (S1G) frequency bands (e.g., frequencies of 1 GHz or less) have the advantage of long-range wireless communication and improved fault tolerance, compared to infrastructure networks. For example, the license-free frequency bands under one Gigahertz (GHz) can be used for wireless communications between mesh nodes in a mesh network.

### BRIEF SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

Disclosed are systems, methods, apparatuses, and computer-readable media for performing wireless communication over a wireless communication network such as a Wireless Local Area Network (WLAN). According to at least one illustrative example, a signaling method for a mesh gate node including an Access Point (AP) interface for communicating with one or more Stations (STAs) in a Basic Service Set (BSS) and further including a mesh interface for communicating with one or more mesh nodes in a Mesh Basic Service Set (MBSS), the signaling method including: monitoring a sub-gigahertz (S1G) wireless radio channel for probe requests received by the mesh gate node; activating an AP mode of the mesh gate node based on receiving a probe request from a STA in the BSS, wherein activating the AP mode includes turning on the AP interface of the mesh gate node; wirelessly connecting to the STA using the AP interface of the mesh gate node; performing communications with the STA in the BSS through the AP interface of the mesh gate node; and performing communications with one or more mesh nodes in the MBSS through the mesh interface of the mesh gate node, wherein the mesh gate node is configured to provide communications between the STA and the one or more mesh nodes via an interconnection between the AP interface and the mesh interface.

In some aspects, the signaling method further includes turning off the AP interface of the mesh gate node based on a determination that a number of connected STAs in the BSS currently associated with the mesh gate node via the AP interface is equal to zero.

In some aspects, the mesh gate node uses the mesh interface to perform the monitoring of the S1G wireless radio channel for probe requests, and wherein the AP interface is turned on only when the AP mode is activated.

In some aspects, the signaling method further includes transmitting a mesh action frame by the mesh gate node, wherein the mesh action frame announces a presence of the mesh gate node with the activated AP mode in the MBSS.

In some aspects, the signaling method further includes periodically transmitting, by the mesh gate node, a beacon for mesh network discovery, wherein the beacon is periodically transmitted using a beacon interval determined based on a number of mesh nodes in the MBSS.

In some aspects, the signaling method further includes transmitting, by the mesh gate node, a beacon at a configured beacon interval; and halting beacon transmission based on a determination that the one or more mesh nodes are not available in the MBSS.

In some aspects, the signaling method further includes transmitting, by the mesh gate node, a probe request containing a mesh Information Element (IE), wherein the mesh gate node is configured to transmit the probe request instead of transmitting a beacon.

In some aspects, the signaling method further includes transmitting a beacon using a Modulation Coding Scheme (MCS) index value that is higher than the lowest MCS index value associated with data transmission in the MBSS.

In some aspects, the beacon is transmitted using a predetermined MCS index value, and wherein the predetermined MCS index value is used for beacon transmissions in all mesh nodes within the MBSS.

In some aspects, the MCS index value used for transmitting the beacon is adaptively determined by the mesh gate node.

In some aspects, the AP mode of the mesh gate node is activated and the AP interface of the mesh gate node is turned on based on a signal strength of the received probe request being above a configured threshold value.

In some aspects, wirelessly connecting to the STA further includes transmitting a probe response through the AP interface of the mesh gate node to the STA, wherein the probe response is transmitted after turning on the AP interface in response to the received probe request.

In some aspects, wirelessly connecting to the STA further includes: connecting to the STA by an association process between the STA and the mesh gate node; and transmitting, by the mesh gate node, an announcement indicative of a presence of the mesh gate node to the one or more mesh nodes in the MBSS.

In some aspects, a mesh gate includes: an Access Point (AP) interface, for communicating with one or more Stations (STAs) in a Basic Service Set (BSS); a mesh interface, for communicating with one or more mesh nodes in a Mesh Basic Service Set (MBSS); a processor, communicatively coupled to the AP interface and the mesh interface; and one or more memory banks, communicatively coupled to the processor and storing processor readable codes that, when executed by the processor, is configured for: monitoring a sub-gigahertz (S1G) wireless radio channel for probe requests; activating an AP mode when receiving a probe request from a STA in the BSS and wirelessly connecting to the STA; and communicating with the connected STA through the AP interface and communicating with one or more mesh nodes in the MBSS through the mesh interface, wherein the connected STA and the mesh node communicate with each other through the mesh gate.

In some aspects, a signaling method for a first station wirelessly connected to an Access Point (AP) in a Basic Service Set (BSS) on a sub-gigahertz (S1G) wireless radio channel is provided, the signaling method including: communicating with the AP through a Station (STA) interface of the first station; and based on a determination that the first station has lost connectivity with the AP: activating a mesh interface of the first station; transmitting a probe request using the mesh interface of the first station, wherein the probe request is indicative of a need for network connectivity for the first station; receiving a probe response from a second station wirelessly connected to the AP in the BSS, wherein the probe response is in response to the probe request; establishing a dynamic mesh network between the first station and the second station based at least in part on receiving the probe response; and communicating with the AP in the BSS, wherein the first station lacks direct connectivity to the AP in the BSS and is configured to communicate with the AP based on using the mesh interface to communicate with the second station as a relay between the first station and the AP in the BSS.

In some aspects, the signaling method further includes: reconnecting to the AP when the first station gains connectivity with the AP based on moving back within a coverage range of the AP; and turning off the mesh interface of the first station to directly communicate with the AP through the STA interface of the first station, wherein the first station turns off the mesh interface after reconnecting to the AP.

In some aspects, a station (STA) is provided, the STA including: a STA interface configured for communication with an Access Point (AP) in a Basic Service Set (BSS); a mesh interface configured for dynamic mesh connection with a Mesh Basic Service Set (MBSS); a processor, communicatively coupled to the STA interface and the mesh interface; and one or more memory banks, communicatively coupled to the processor and storing processor readable instructions that, when executed by the processor, causes the processor to perform actions including: communicating with the AP through the Station (STA) interface; and based on a determination that the STA has lost connectivity with the AP: activating the mesh interface of the STA; transmitting a probe request using the mesh interface of the STA, wherein the probe request is indicative of a need for network connectivity for the STA; receiving a probe response from a second STA wirelessly connected to the AP in the BSS, wherein the probe response is in response to the probe request; establishing a dynamic mesh network between the STA and the second STA based at least in part on receiving the probe response; and communicating with the AP based on using the mesh interface of the STA to communicate with the second STA as a relay between the first STA and the AP in the BSS.

Other objects and advantages associated with the aspects disclosed herein will be apparent to those skilled in the art based on the accompanying drawings and detailed description.

### BRIEF DESCRIPTION OF THE DRAWINGS

Illustrative aspects of the present application are described in detail below with reference to the following drawing figures:
FIG. 1 is a block diagram illustrating an exemplary wireless communication network;
FIG. 2A is a block diagram of a wireless communication device that can implement a station (STA) or access point (AP), in accordance with some examples;
FIG. 2B is a schematic block diagram of the receiver data flow architecture of the wireless communication device of FIG. 2A, in accordance with some examples;
FIG. 2C is a schematic block diagram of a transmitter data flow architecture that can be used to transmit Radio Frequency (RF) signals over a wireless medium, in accordance with some examples;
FIGS. 3A-3B illustrate an example of a Wi-Fi HaLow wireless local area network (WLAN) including one or more stations (STAs) configured to form and/or provide a dynamic mesh network for range extension to STAs moving out of coverage of the Wi-Fi HaLow WLAN, in accordance with some examples;
FIGS. 4A-4B illustrate an example of a dynamic mesh network including a mesh gate node configured to connect with a Basic Service Set (BSS) of a Wi-Fi WLAN via an AP interface and/or AP mode of the mesh gate node, and configured to connect with a mesh BSS (MBSS) of a dynamic mesh network via a mesh interface and/or mesh mode of the mesh gate node, in accordance with some examples;
FIG. 5A illustrates an example of a mesh gate node (e.g., co-located AP) with an AP interface for communications with a Wi-Fi WLAN BSS, and a mesh interface for communications with a dynamic mesh network MBSS, in accordance with some examples;
FIG. 5B illustrates an example of a mesh gate node (e.g., co-located AP) with an AP interface for communications with an external network, and a mesh interface for communications with a dynamic mesh network MBSS, in accordance with some examples;
FIG. 6 illustrates an example of a mesh backhaul network include multiple mesh nodes and mesh gate nodes for providing mesh backhaul connectivity between a first Wi-Fi WLAN BSS connected to a first mesh gate node of the mesh backhaul network and a second Wi-Fi WLAN BSS connected to a second mesh gate node of the mesh backhaul network, in accordance with some examples;
FIG. 7 illustrates an example of a mesh backhaul network for providing mesh backhaul connectivity between a remote Wi-Fi WLAN BSS and an external network such as the internet via respective connections to first and second mesh gate nodes of the mesh backhaul network, in accordance with some examples;
FIGS. 8A-8D illustrate a communications flow and signaling diagram associated with operations for implementing a dynamic mesh network beaconless mode for scanning and discovery phases to avoid mesh initial scanning, in accordance with some examples;
FIG. 9 is a flow diagram of an example process for adaptive root mesh configuration for a first mesh node in a mesh network, in accordance with some examples; and
FIG. 10 is a block diagram illustrating an example of a computing system for implementing certain aspects described herein, in accordance with some examples.

### DETAILED DESCRIPTION

Certain aspects of this disclosure are provided below. Some of these aspects may be applied independently and some of them may be applied in combination as would be apparent to those of skill in the art. In the following description, for the purposes of explanation, specific details are set forth in order to provide a thorough understanding of aspects of the application. However, it will be apparent that various aspects may be practiced without these specific details. The figures and description are not intended to be restrictive.

The ensuing description provides example aspects only, and is not intended to limit the scope, applicability, or configuration of the disclosure. Rather, the ensuing description of the example aspects will provide those skilled in the art with an enabling description for implementing an example aspect. It should be understood that various changes may be made in the function and arrangement of elements without departing from the spirit and scope of the application as set forth in the appended claims.

### OVERVIEW

A Wireless Local Area Network (WLAN) is a wireless communication network that uses high-frequency radio waves (e.g., radio frequency (RF) waves) for connecting devices within a limited area. Most WLANs are based on one or more of the various Institute of Electrical and Electronics Engineers (IEEE) 802.11 Wi-Fi standards. Devices connected to a WLAN may be implemented as either an Access Point (AP) providing services or a client station (STA). A Basic Service Set (BSS) typically contains an AP and a group of STAs wirelessly communicating at the physical layer level. For example, a respective AP and an associated set of STAs (e.g., a set of STAs associated with the respective AP) can comprise one BSS of the WLAN, where the BSS is managed by the AP included within the BSS. The BSS can be identified to users by a corresponding Service Set Identifier (SSID). An AP can be configured as a master or primary device that is used to configure and maintain the network (e.g., the Wi-Fi WLAN, etc.). The AP associates all valid STAs and periodically transmits beacon frames to indicate various network information and/or network details to the BSS.

While mobile Wi-Fi STAs offer the convenience of wireless connectivity, there are several challenges that can affect the overall network performance and user experience associated with the wireless connectivity of the Wi-Fi STAs to a Wi-Fi network. For example, the challenges can include maintaining a proper signal strength and coverage, preventing network congestions, and resolving interferences. Among various others. Mobile Wi-Fi STAs rely on the wireless network availability and the strength of Wi-Fi signals from APs or hotspot devices. However, in areas with weak or limited wireless communication coverage, the signal strength may be insufficient for stable connections to be established or maintained between a STA and an AP or other hotspot device. Unstable connections to a STA can result in slow data speeds, frequent disconnections, and/or difficulty in establishing a connection, among various others.

In crowded or densely populated areas, a Wi-Fi network can become congested as too many devices attempt to connect simultaneously to the same AP (e.g., with the congestion based on the limited overall bandwidth and airtime available for communications to or from the given AP and the set of STAs associated with the given AP). Such congestion may lead to one or more of a reduction in overall data speeds to the STAs and on the Wi-Fi WLAN, increased latency, and/or intermittent connectivity for mobile Wi-Fi STAs, among various others. Additionally, mobile Wi-Fi STAs can experience interference from various sources, such as the interferences from other wireless communication networks operating on the same or overlapped channel(s). For instance, co-channel interference can occur when multiple networks or devices operate on the same channel; adjacent channel interference can occur when signals from nearby channels spill over into the operating channel of the Wi-Fi STA; non-W-Fi interference can be caused by other devices operating in the same frequency bands (e.g., microwave ovens, cordless phones, Bluetooth devices, IoT devices, etc.); multipath interference can be caused by the reflection of RF waves that result in multiple versions of the same signal arriving at the receiver at different times, signal fading, reduced data rates, etc.

The interferences may cause heavy blockages in signal paths, thereby leading to slow data speeds, packet loss, and/or connection drops. To mitigate these challenges, one possible approach is to ensure the signal strength to/from each STA is maintained above a configured (e.g., acceptable) Received Signal Strength Indicator (RSSI) threshold value, to thereby avoid any weak or low RSSI STAs in the network. Other techniques may involve the use of various Wi-Fi optimization techniques such as dynamic channel selection and adjustment, or the use of Wi-Fi extenders (e.g., additional devices used to relay or repeat signals between an AP and one or more STAs), which can enhance the performance and reliability of mobile Wi-Fi STAs. However, these approaches do not provide a scalable solution and deploying additional Wi-Fi extenders is quite challenging and can become cost prohibitive, particularly in larger scale networks and/or networks with frequently changing topologies.

IEEE 802.11ah, also referred to as Wi-Fi HaLow, is a wireless networking protocol that uses a sub-gigahertz (S1G) wireless radio to provide low power consumption and long distance wireless communication. Wi-Fi HaLow devices operate in the license-exempt ISM (Industrial, Scientific, and Medical) frequency bands under one Gigahertz (GHz). A Wi-Fi HaLow AP can provide connectivity to thousands of STAs within a network coverage of approximately a one-kilometer radius. Wi-Fi HaLow supports various bandwidths, including 1MHz, 2MHz, 4MHz, 8MHz, and 16MHz, which are approximately one order of magnitude narrower (e.g., 10 times narrower) than the bandwidths utilized by the IEEE 802.11ac (Wi-Fi 5) standard. Moreover, the symbol duration for IEEE 802.11ah Wi-Fi HaLow operating at a 2MHz bandwidth can be up to 10 times longer than the comparable symbol duration for IEEE 802.11ac Wi-Fi 5. As such, Wi-Fi HaLow networks have both significantly narrower bandwidths and significantly longer symbol durations within that narrower bandwidth, as compared to a Wi-Fi 5 or other more recent Wi-Fi network. Accordingly, airtime is more limited as a whole, and the airtime used for each individual data transmission in a HaLow network is also much longer as compared to a Wi-Fi 5 network. Although Wi-Fi HaLow STAs can be grouped to minimize contention on the air media, effective and efficient radio resource management methods for preventing network congestion are still needed for Wi-Fi HaLow networks.

A Wireless Mesh Network (WMN) is a communication network that includes a plurality of radio nodes organized in a mesh topology. A mesh topology can be based on rich interconnections among nodes, where each node of the mesh topology is connected to one or more other nodes of the mesh topology. In the context of a WMN, a mesh topology between the plurality of radio nodes enables multiple different pathways to be taken between a source and a destination. In some examples, a WMN may typically be implemented as a low-mobility wireless ad-hoc network. Mesh infrastructure can be used to carry data over long distances by splitting each distance into a series of short hops, where intermediate nodes cooperatively pass data from one node to another by making forwarding decisions based on each intermediate node's knowledge of the network and/or the underlying mesh topology. For example, using knowledge of the network and/or underlying mesh topology, every node in the network could dynamically serve as a router for every other node.

An example of a WMN is an IEEE 802.11s mesh network, where the IEEE 802.11s wireless mesh networking standard defines the interconnection between multiple wireless devices to create a WLAN mesh network. An 802.11s wireless mesh network device, also known as a Mesh Station (mesh STA), forms mesh links with other mesh STAs (e.g., one or more additional mesh STAs associated with the WMN), over which mesh paths can be established using an ad hoc mobile routing protocol. The multi-hop wireless links in the mesh architecture can be used to enable the routing of packets from one node (e.g., a source mesh STA on the WMN) through one or more other nodes (e.g., intermediate mesh STAs, also on the WMN) towards the destination node (e.g., a destination mesh STA, also on the WMN). The IEEE 802.11s mesh standard mandates every node in the mesh network to transmit a beacon at every beacon interval. This beacon can also be referred to as a mesh beacon, and advertises a mesh ID, mesh profile, and power save state. The IEEE 802.11 s mesh beacons are intended for discovery of mesh networks and synchronization among mesh nodes for mesh power save (e.g., if or when the mesh power save mode is enabled).

Aspects of the present invention provide a novel and effective signaling method for communications between a Wi-Fi WLAN and a mesh network, based on using a mesh gate node to communicate with respective STAs or devices on both the Wi-Fi WLAN and the mesh network, and to bridge communications therebetween.

As used herein, a mesh gate node can also be referred to as a "mesh gate" or a "mesh node," and can be provided as a node or other wireless communication device that includes both an Access Point (AP) interface for communicating with one or more STAs in a Basic Service Set (BSS) (e.g., of a Wi-Fi WLAN, S1G network, Wi-Fi HaLow network, etc.), and a mesh interface for communicating with one or more mesh nodes in a Mesh Basic Service Set (MBSS).

In one illustrative example, the signaling method provided by the systems and techniques disclosed herein comprises monitoring a sub-gigahertz (S1G) wireless radio channel for probe requests and activating an AP mode (e.g., corresponding to the AP interface of the mesh gate node) in response to the mesh gate node receiving a probe request from a STA in the BSS. The mesh gate node can wirelessly connect to the STA that transmitted the probe request, and may then perform or provide wireless communications with the connected STA through the AP interface of the mesh gate node. The mesh gate node can simultaneously communicate with one or more mesh nodes in the MBSS through the mesh interface of the mesh gate node. The connected STA(s) of the BSS and the mesh node(s) of the MBSS can communicate with each other through the mesh gate node, based on the mesh gate node being included in both the BSS (via the mesh gate node AP interface) and the MBSS (via the mesh gate node mesh interface).

In an embodiment of the present invention, the signaling method for the mesh gate node further includes configuring the mesh gate node to turn off or otherwise deactivate the AP interface when a number of connected STAs in the BSS reaches zero. For example, if the mesh gate node is not connected to any STAs in the BSS, the mesh gate node can turn off or deactivate its AP interface to save power. In some embodiments, the mesh gate node can be configured to monitor for probe requests through the mesh interface as the AP interface is turned off (and while the AP interface remains turned off). Accordingly, the mesh gate node can use the mesh interface to detect or receive probe requests from STAs attempting to connect to or join the BSS while the mesh gate node's AP interface is deactivated. The mesh gate node may be configured to turn on (e.g., activate or reactivate) the AP interface only when there is a probe request from a STA (e.g., only in response to receiving or detecting a probe request from a STA, via the mesh interface of the mesh gate node).

In some embodiments, the mesh gate can be configured to periodically transmit a mesh action frame to announce a presence of the mesh gate node in the MBSS. For example, the mesh action frame can announce or otherwise indicate the presence of the mesh gate node using a Root Announcement (RANN) element, where the RANN element includes information such as a hop count. In some aspects, the mesh gate node may transmit a beacon for discovery of mesh networks at a periodic beacon interval, where the beacon interval may be determined according to a number of mesh nodes in the MBSS. In some embodiments, a longer beacon interval can be used when a relatively small number of mesh nodes are present in the MBSS, and/or a long beacon interval can be used when the number of mesh nodes in the MBSS reaches zero. In some embodiments, the mesh node can halt transmission of the beacon (e.g., the mesh node can stop transmitting the beacon) when no other mesh nodes are available in the MBSS. The mesh node can start or resume beaconing (e.g., transmitting then beacon at the configured beacon interval) again based on the mesh node detecting or receiving probe requests with a mesh identifier from neighboring mesh peers.

In some aspects, the beacon transmitted by the mesh gate can be implemented as a single, integrated beacon for both connected STAs in the BSS and mesh nodes in the MBSS. For example, the integrated beacon can combine information of a mesh beacon (e.g., indicative of information associated with the MBSS and/or connection with the mesh interface of the mesh gate) and information of a BSS beacon (e.g., indicative of information associated with the BSS and/or connection with the AP interface of the mesh gate). The mesh gate can be configured to broadcast the integrated beacon at a predetermined interval. For example, the predetermined interval can be selected to be the same as an interval originally or previously used for broadcasting the standalone mesh beacon or the standalone BSS beacon (or both).

In some aspects, the mesh gate can be configured to transmit a probe request containing a mesh ID Information Element (IE) instead of a beacon.

In some embodiments, the beacon transmitted by the mesh gate node can be coded using a higher Modulation Coding Scheme (MCS) than a lowest MCS (e.g., which is generally used for management frames transmission in the MBSS). For example, the MCS used for transmitting the beacon can be a predetermined MCS, where the predetermined MCS is used for beacon transmission in all mesh nodes within the MBSS. In some examples, the MCS used for coding and transmitting the beacon can be adaptively determined by the mesh gate. In some embodiments, the MCS used for transmitting the beacon can be based on the MCS used for data transmission, for example, the MCS used for beacon transmission can be set to be the minimum of the set of transmission rates/MCS index values utilized by all the peers in the network.

In some embodiments, the AP mode of the mesh gate node is activated (and the AP interface of the mesh gate node is turned on) based on the mesh gate node determining that a signal strength of a received probe request (e.g., from a STA in the BSS) is above a configured threshold value. A probe response can be transmitted from the mesh gate node, through the AP interface thereof, to the STA after turning on the AP interface in response to the received probe request. The mesh gate's AP interface can then wirelessly connect to the STA by an association process.

An aspect of the present invention provides a mesh gate comprising an AP interface, a mesh interface, a processor communicatively coupled to the AP and mesh interfaces, and one or more memory banks communicatively coupled to the processor. The memory banks store processor readable codes, that when executed by the processor, is configured for monitoring an S1G wireless radio channel for probe requests, activating an AP mode when receiving a probe request from a STA in the BSS, wirelessly connecting to the STA, communicating with the connected STA through the AP interface, and communicating with one or more mesh nodes in the MBSS through the mesh interface. The connected STA and the mesh node communicate with each other through the mesh gate.

Another aspect of the present invention provides a signaling method for a first station wirelessly connected to an AP in a BSS on an S1G wireless radio channel, the signaling method comprises communicating with the AP through a STA interface, and when the first station loses connectivity with the AP as it moves out of range of the AP's coverage, activating a mesh interface, transmitting a probe request through the mesh interface to notify a need for network connectivity, receiving a probe response from a second station which is wirelessly connected to the same AP in the BSS in response to the probe request to establish a dynamic mesh network between the first station and the second station, and communicating with the AP through the second station using the mesh interface. In some embodiments, the first station reconnects to the AP when it moves back within the range of the AP, and turns off the mesh interface so it can directly communicate with the AP after reconnection.

An embodiment of the station comprises a STA interface for communicating with an AP in a BSS, a mesh interface for dynamic mesh connection, a processor communicatively coupled to the STA interface and the mesh interface, and one or more memory banks storing processor readable codes to be executed by the processor. The station is configured to communicate with the AP through the STA interface, and when the station loses connectivity with the AP, activating the mesh interface, transmitting a probe request through the mesh interface to notify a need for network connectivity, receiving a probe response from a second station wireless connected to the AP in the BSS in response to the probe request to establish a dynamic mesh network between the station and the second station, and communicating with the AP through the second station using the mesh interface.

### EXAMPLE EMBODIMENTS

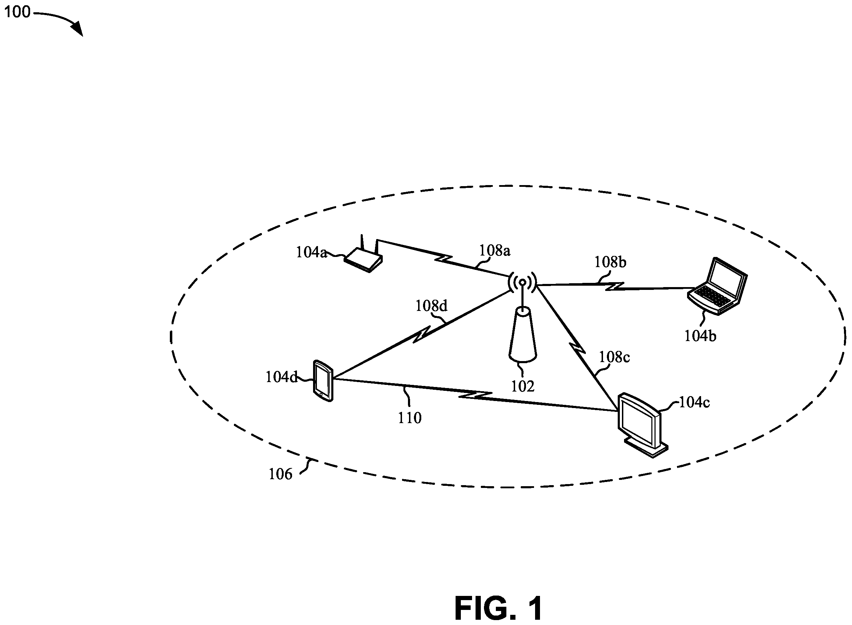

FIG. 1 is a block diagram illustrating an exemplary wireless communication network 100. In some aspects, the wireless communication network 100 can be an example of a Wireless Local Area Network (WLAN). As used herein, a WLAN may be a Wi-Fi network. In some examples, the WLAN 100 can be a network implementing at least one of the IEEE 802.11 family of wireless communication protocol standards (e.g., such as that defined by the IEEE 802.11-2020 specification or amendments thereof including, but not limited to, 802.11ah, 802.11ay, 802.11ax, 802.11az, 802.11ba and 802.11be). The WLAN 100 may include at least one AP 102 and multiple associated STAs 104. For example, the STAs 104 can include a first STA 104a, a second STA 104b, a third STA 104c, a fourth STA 104d, etc. While only one AP 102 is shown, the WLAN network 100 also can include multiple APs 102.

Each of the STAs 104a-104d may be referred to as a Mobile Station (MS), a mobile device, a mobile handset, a wireless handset, an Access Terminal (AT), a User Equipment (UE), a Subscriber Station (SS), and/or a subscriber unit, among other examples. The STAs 104 may represent various devices such as mobile phones, handheld devices, netbooks, computers, tablet computers, laptops, display devices (e.g., TVs, computer monitors, navigation systems, etc.), music or other audio or stereo devices, remote control devices ("remotes"), printers, kitchen or other household appliances, key fobs (e.g., for Passive Keyless Entry and Start (PKES) systems), etc.

A single AP 102 and an associated set of STAs 104a-104d may be referred to as a Basic Service Set (BSS), which is managed by the respective AP 102. FIG. 1 additionally shows an example coverage area 106 of the AP 102, which may represent a Basic Service Area (BSA) of the WLAN 100. The BSS may be identified to users by a Service Set Identifier (SSID), as well as to other devices by a Basic Service Set Identifier (BSSID), which may be a Medium Access Control (MAC) address of the AP 102.

The AP 102 periodically broadcasts beacon frames ("beacons") including the BSSID to enable any STAs (e.g., such as one or more, or all, of the STAs 104a-104d) within wireless range of the AP 102 to associate or re-associate with the AP 102 to establish a respective communication link 108a-108d (e.g., hereinafter also referred to as a "Wi-Fi link"). For example, the first STA 104a can establish a respective communication link 108a with the AP 102, the second STA 104b can establish a respective communication link 108b with the AP 102, the third STA 104c can establish a respective communication link 108c with the AP 102, the fourth STA 104d can establish a respective communication link 108d with the AP 102, etc. The STAs 104a-104d may additionally use the beacon frames broadcast by AP 102 to maintain the respective communication link 108a-108d with the AP 102. For example, the beacons can include an identification of a primary channel used by the respective AP 102 as well as a timing synchronization function for establishing or maintaining timing synchronization with the AP 102. The AP 102 may provide access to external networks to various STAs in the WLAN via respective communication links 108.

To establish the communication links 108a-108d with an AP 102, each of the respective STAs 104a-104d can perform passive or active scanning operations ("scans") on frequency channels in one or more frequency bands. For example, to perform passive scanning, each of the STAs 104a-104d listens for beacons that are transmitted by the AP 102 at a periodic time interval referred to as the Target Beacon Transmission Time (TBTT). The TBTT can be measured in Time Units (TUs). In some examples, one TU may be equal to 1024 microseconds (µs). In some examples, the TBTT can have a default value of 102.4 milliseconds (ms). To perform active scanning, each of the STAs 104a-104d can generate and sequentially transmit probe requests on each channel to be scanned and listens for probe responses from the AP 102. Each of the STAs 104a-104d may be configured to identify or select an AP 102 with which to associate (e.g., based on the scanning information obtained through the passive or active scans), and to perform authentication and association operations to establish a respective communication link 108a-108d with the selected AP 102. The AP 102 assigns an Association Identifier (AID) to each of the STAs 104a-104d at the culmination of the association operations, which the AP 102 uses to track the STAs 104a-104d.

In some cases, one or more of the STAs 104a-104d may have the opportunity to select one of many BSSs within range of the STA or to select among multiple APs 102 that together form an Extended Service Set (ESS) including multiple connected BSSs. An extended network station associated with the WLAN 100 may be connected to a wired or wireless distribution system that may allow multiple APs 102 to be connected in an ESS. In some examples, one or more of the STAs 104a-104d can be covered by more than one AP 102 and can associate with different APs 102 at different times for transmissions. After association with an AP 102, one or more of the STAs 104a-104d also may be configured to periodically scan its surroundings to find a more suitable AP with which to associate. For example, a given one of the STAs 104a-104d that is moving away from its associated AP 102 may perform a "roaming" scan to find another AP having more desirable network characteristics (e.g., such as a greater Received Signal Strength Indicator (RSSI), a reduced traffic load, etc.).

In some cases, the STAs 104a-104d may form networks without APs 102 or other equipment other than the STAs 104a-104d themselves. One example of such a network is an ad hoc network. Some examples of an ad hoc network are mesh networks and peer-to-peer (P2P) networks. In some cases, ad hoc networks may be implemented within a larger wireless network In such implementations, while the STAs 104a-104d may be capable of communicating with each other through the AP 102 using the respective communication links 108a-108d, the STAs 104a-104d, the STAs may also communicate directly with each other using direct wireless links 110. In some examples, two STAs may communicate via a direct communication link 110 regardless of whether both STAs 104 are associated with and served by the same AP 102. In such an ad hoc system, one or more of the STAs 104a-104d may assume the role filled by the AP 102 in a BSS. Such a STA may be referred to as a Group Owner (GO) and may coordinate transmissions within the ad hoc network. Examples of direct wireless links 110 can include one or more of Wi-Fi Direct connections, connections established by using a Wi-Fi Tunneled Direct Link Setup (TDLS) link, and other P2P group connections, etc.

The APs 102 and STAs 104a-104d may function and communicate using the respective communication links 108a-108d according to at least one of the IEEE 802.11 wireless communication protocol standards. These standards define the WLAN radio and baseband protocols for the physical (PHY) and Medium Access Control (MAC) layers. For example, the APs 102 and STAs 104a-104d transmit and receive wireless communications to and from one another in the form of PHY Protocol Data Units (PPDUs) or Physical Layer Convergence Protocol (PLCP) PDUs. The APs 102 and STAs 104a-104d in the WLAN 100 may transmit PPDUs over a license or unlicensed spectrum, which may be a portion of spectrum that includes frequency bands traditionally used by Wi-Fi technology, such as the 2.4 GHz band, the 5 GHz band, the 60 GHz band, the 3.6 GHz band, and the sub-1 GHz band. Some implementations of the APs 102 and STAs 104a-104d described herein also may communicate in other frequency bands, such as the 6 GHz band, which may support both licensed and unlicensed communications. The APs 102 and STAs 104a-104d also can be configured to communicate over other frequency bands such as shared licensed frequency bands, where multiple operators may have a license to operate in the same or overlapping frequency band or bands.

Each of the frequency bands may include multiple sub-bands or frequency channels. For example, PPDUs conforming to the IEEE 802.11 standards and specifications may be transmitted over frequency bands that are divided into multiple 20 MHz channels. In such examples, the PPDUs are transmitted over a physical channel having a minimum bandwidth of 20 MHz, although other channel bandwidths are also possible. In some cases, a larger bandwidth channel can be formed using channel bonding, which bonds together multiple channels each of the minimum bandwidth.

Each PPDU is a composite structure that includes a PHY preamble and a payload in the form of a PHY Service Data Unit (PSDU). The information provided in the preamble may be used by a receiving device to decode the subsequent data in the PSDU. In instances in which PPDUs are transmitted over a bonded channel, the preamble fields may be duplicated and transmitted in each of the multiple component channels. The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The format of, coding of, and information provided in the non-legacy portion of the preamble is based on the particular IEEE 802.11 protocol to be used to transmit the payload.

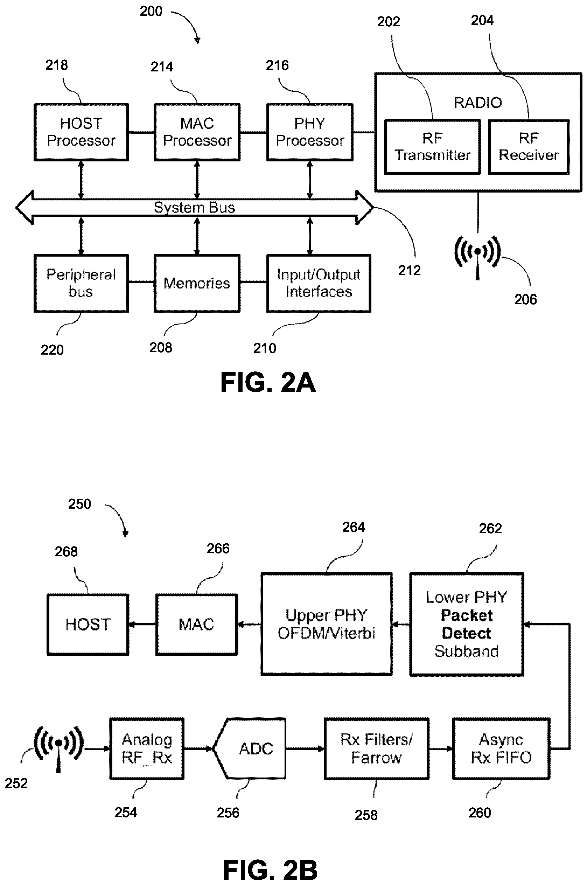

FIG. 2A is a high-level block diagram of an exemplary wireless communication device 200 that can be used to implement a STA or an AP, in some examples. The wireless communication device 200 can include a MAC layer and a PHY layer in accordance with one or more of the IEEE 802.11 standards.

The wireless communication device 200 includes a Radio Frequency (RF) transmitter module 202, an RF receiver module 204, an antenna unit 206, one or more memory banks 208, input and output interfaces 210, and communication bus 212. The RF transmitter module 202 and the RF receiver module 204 include a modem (modulator-demodulator device), which transmits data by modulating one or more carrier wave signals to encode digital information, as well as receives data by demodulating the signal to recreate the original digital information. As illustrated, the wireless communication device 200 further includes a MAC processor 214, a PHY processor 216 and a HOST processor 218. These processors can be any type of Integrated Circuit (IC) including a general processing unit, an Application Specific Integrated Circuit (ASIC) or Reduced Instruction Set Computer - Five (RISC-V) based ICs, amongst others.

The memory 208 can be used to store software and/or computer-readable instructions, including software or instructions that can be used to implement at least some functions of the MAC layer. For example, each processor included in the wireless communication device 200 (e.g., MAC processor 214, PHY processor 216, HOST processor 218, etc.) executes respective software to implement the functions of the respective communication/application layer.

The PHY processor 216 includes a transmitting signal processing unit and a receiving signal processing unit (not shown) and can be used to manage the interface with the Wireless Medium (WM). The PHY processor 216 operates on PPDUs by exchanging digital samples with the radio module which includes the RF transmitter 202, the RF receiver 204, analog-to-digital converters, and digital filters.

The MAC processor 214 executes MAC level instructions and manages the interface between the application software and the WM, through the PHY processor 216. The MAC processor 214 is responsible for coordinating access to the WM so that the Access Point (AP) and STAs in range can communicate effectively. The MAC processor 214 adds header and tail bytes to units of data provided by the higher levels and sends them to the PHY layer for transmission. The reverse happens when receiving data from the PHY layer. If a frame is received in error, the MAC processor 214 manages the retransmission of the frame.

The HOST processor 218 interfaces with the MAC layer and is responsible for running higher level functionalities of the wireless communication device.

The PHY processor 216, the MAC processor 214, the HOST processor 218, the peripheral bus 220, the memories 208, and the input/output interfaces 210 communicate with each other via the peripheral bus 212. The peripheral bus 220 connects to a number of peripherals that support core functions of the wireless communication device 200, including timers, interrupts, radio/filters/system registers, counters, UART, GPIO interfaces, among others. The memory 208 may further store an operating system and applications. In some examples, the memory may store recorded information about captured frames and packets. The input/output interface unit 210 allows for exchange of information with a user of the wireless communication device. The antenna unit 206 can include a single antenna and/or can include or multiple antennas. For example, multiple antennas can be used to implement Multiple Input Multiple Output (MIMO) techniques, among others.

FIG. 2B illustrates a schematic block diagram of a receiver data flow architecture 250 that can be used to receive Wi-Fi packets over the network. In one illustrative example, the receiver data flow architecture 250 illustrated in FIG. 2B can correspond to or otherwise be associated with the wireless communication device 200 illustrated in FIG. 2A. Radio signals are received over the WM and translated into electrical signals by the receiving antenna 252 (e.g., which can be the same as or similar to antenna 206). The received signal is conditioned using a series of analog filters 254 (e.g., depicted as analog RF receive (Rx) filters) before being converted into a digital signal equivalent using an Analog-to-Digital Converter (ADC) 256. The sampled signal output of ADC 256 is conditioned again using a filter bank 258, which can include one or more digital RF filters and/or a farrow, before the samples are collected in an asynchronous receiving First-In-First-Out (FIFO) data structure 260.

Samples in FIFO structure 260 can be accessed by a plurality of modules. For example, samples can be accessed by a packet detect module and a sub-band module, both of which may be included in the lower-level PHY portion 262 depicted in FIG. 2B. In some embodiments, the lower-level PHY portion 262 is itself included in the PHY processor 216 illustrated in FIG. 2A.

The packet detect module included in the lower-level PHY portion 262 can include hardware and/or implement algorithms that can be used to analyze the initial sections of the PPDU in the time domain. Based on the analysis, the packet detect module can be used to recognize a received frame and synchronize frequency and timing of the wireless communication device with the packet being received. The sub-band module included in the lower-level PHY portion 262 can include hardware and/or implement algorithms that can be used to detect which subchannel in the allocated frequency band is being used for the packet being received.

Once a packet is detected and the relevant subchannel is established, samples can be forwarded to an upper-level PHY portion 264. The upper-level PHY portion 264 can be included in the PHY processor 216 illustrated in FIG. 2A. In some aspects, upper-level PHY portion 264 can be used to process and decode Orthogonal Division Multiplexing (OFDM) symbols (e.g., with the support of a coprocessor module) to reconstruct the full PPDU. The reconstructed PPDU is output by the upper-level PHY portion 264 and subsequently processed by the MAC layer processor 266. The MAC layer processor 266 can be used to extract the data payload from the PPDU and provide the relevant information to the HOST layer 268 for consumption.

In some examples, the MAC layer processor 266 illustrated in FIG. 2B can be the same as or similar to the MAC processor 214 illustrated in FIG. 2A. In some cases, the HOST layer 268 illustrated in FIG. 2B can include or otherwise can be the same as or similar to the HOST processor 218 illustrated in FIG. 2A.

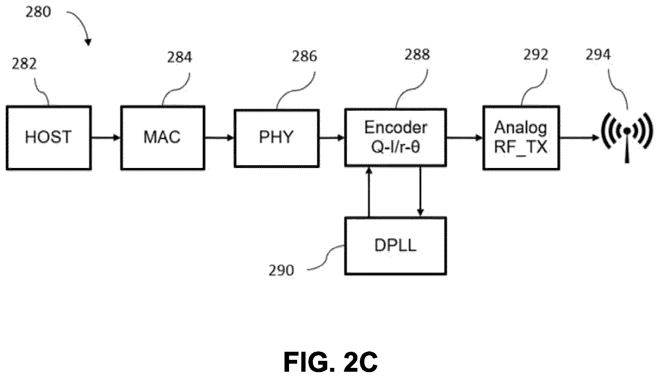

FIG. 2C is a schematic block diagram of a transmitter data flow architecture 280 that can be used to transmit RF signals over a wireless medium, in accordance with some examples. More particularly, FIG. 2C illustrates a simplified schematic block diagram of a transmitter data flow architecture 280 used for transmitting radio signals over a WM. Data can be generated from a HOST or APP module 282 and packaged in a MAC level Protocol Data Unit (MPDU) to be routed over the wireless network by the MAC management module 284. The PHY module 286 interfaces with the WM and compiles a PPDU by adding a PHY preamble and the tail to the MPDU. Usually a Modulation Coding Scheme (MCS) for transmission of the packet over the medium is established using a rate control algorithm by the MAC module 284 or the PHY module 286. The modulation scheme selected can define the modulation technique to be used to transmit the data on the WM and the coding rate. Based on the modulation scheme selected, for example Quadrature Amplitude Modulation (QAM) 64, the PPDU is modulated to be transmitted on the WM. The encoder module 288 generates signals corresponding to points of QAM constellation symbols (groups of bits of the PPDU) which can be encoded using polar (r-θ) or cartesian (Q-I) coordinates. The modulation is done by linking the encoder module 288 to a Digital Phase Lock Loop (DPLL) 290. The modulated signals may be filtered by analog filters 292 and transmitted using a transmitting antenna 294.

As noted previously, the systems and techniques described herein can be used to provide dynamic mesh networks and/or dynamic mesh networking for extending the range and/or reliability of communications associated with Wi-Fi and/or S1G WLANs, including Wi-Fi HaLow networks. For example, aspects of the present invention provide a novel and effective signaling method for communications between a Wi-Fi infrastructure network and a mesh network, based on using a mesh gate node to communicate with respective STAs or devices on both the Wi-Fi infrastructure network and the mesh network, and to bridge communications therebetween. As used herein, a mesh gate node can also be referred to as a "mesh gate" or a "mesh node," and can be provided as a node or other wireless communication device that includes both an Access Point (AP) interface for communicating with one or more STAs in a Basic Service Set (BSS) (e.g., of a Wi-Fi infrastructure network, S1G network, Wi-Fi HaLow network, etc.), and a mesh interface for communicating with one or more mesh nodes in a Mesh Basic Service Set (MBSS).

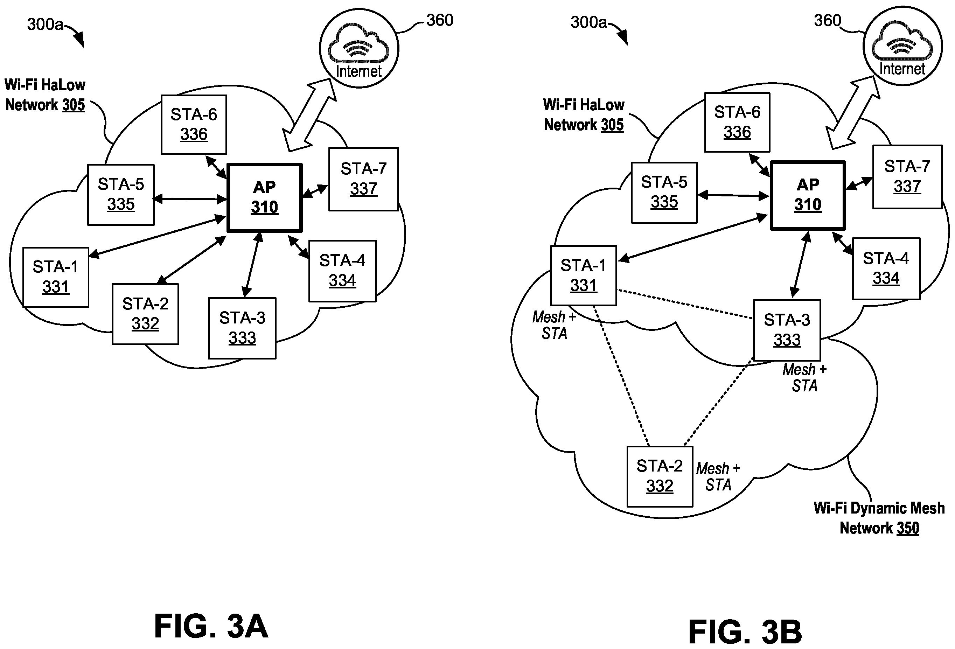

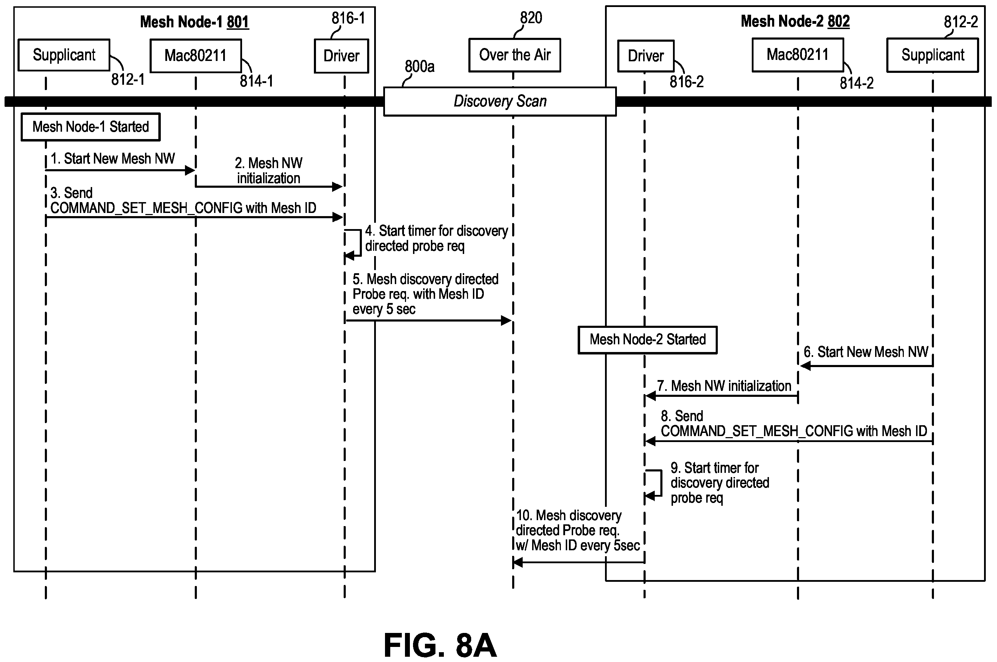

As will be described below with reference to at least FIGS. 3A-8D, a mesh gate node can selectively activate (and deactivate) the AP interface to provide (or not provide) an AP mode for communicating with infrastructure STAs, and can selectively activate (and deactivate) the mesh interface to provide (or not provide) a mesh mode for communicating with mesh nodes and/or mesh STAs.

### Dynamic S1G Mesh Network - STA Extensions

As contemplated herein, one technique for ensuring adequate signal strength and coverage for a WLAN network operating using the S1G spectrum (e.g., a Wi-Fi HaLow WLAN, etc.) can be based on utilizing peer stations (STAs) that can extend the WLAN network coverage by establishing a mesh network for a STA outside the coverage of the WLAN network. For example, one or more STAs can be configured to operate as infrastructure STAs for communicating with the WLAN and can be configured to operate to extend the WLAN coverage by dynamically establishing a mesh network for one or more STAs that are outside the coverage area of the WLAN network (e.g., one or more STAs beyond the range of an AP of the WLAN, etc.).

FIG. 3A is a diagram illustrating a first example network configuration 300a, corresponding to a Wi-Fi HaLow network (e.g., WLAN) 305 that includes an AP 310 connected to a plurality of STAs STA-1 331, STA-2 332, STA-3 333, STA-4 334, STA-5 335, STA-6 336, STA-7 337, ..., etc. In particular, the first network configuration 300a of FIG. 3A corresponds to a scenario where the plurality of STAs 331-337 are all within the range of network coverage for the Wi-Fi HaLow network 305 (e.g., each STA 331-337 is within range of and able to maintain a connection with the AP 310).

FIG. 3B is a diagram illustrating a second example network configuration 300b, where the second STA-2 332 has moved out of coverage of the Wi-Fi HaLow network 305, but maintains its connectivity to both the Wi-Fi HaLow network 305 and beyond (e.g., to the internet 360, or other external network, etc.) based on the formation of a dynamic mesh network 350 between the out-of-range STA-2 332 and the within-range STAs STA-1 331 and STA-3 333. For example, the second network configuration 300b of FIG. 3B can correspond to an embodiment where the STAs 331-337 of the Wi-Fi HaLow network 305 are capable of forming a dynamic mesh network for range extension, according to embodiments of the present invention.

In general, the Wi-Fi HaLow AP 310 shown in the Wi-Fi HaLow network 305 of FIGS. 3A and 3B can access the Internet 360 and can provide a respective wireless connection for associated stations within range of the AP 310. For example, in FIG. 3A, the AP 310 provides a respective wireless connection to each of STA1, STA2, STA3, STA4, STAS, STA6, and STA7 (STAs 331-337, respectively). The plurality of stations 331-337 associated with the Wi-Fi HaLow network 305 can be any electronic device such as computers, laptops, cell phones, smart phones, and/or Internet of Things (IoT) devices, etc., among various others. As shown in FIGS. 3A and 3B, one of the stations, STA-2 332, moves out of the coverage area/range of the AP 310. Based on STA-2 332 moving out of the coverage area/range of the AP 310, STA-2 loses its connectivity with the AP 310 and the Wi-Fi HaLow network 305.

Conventionally, where the STAs 331-337 are all infrastructure STAs (e.g., unable or not used to provide a mesh mode for mesh networking, etc.), STA-2 332 moving out of range of the AP 310 would result in the STA-2 332 losing connectivity to both the Wi-Fi HaLow network 305 and any external networks connected to the AP 310/Wi-Fi HaLow network 305 (e.g., such as the internet 360). If configured as only an infrastructure STA, STA-2 332 when beyond the coverage of AP 305/WiFi HaLow network 305 would also be unable to communicate with any of the remaining peer STAs 331 and 333-337 that remain on the Wi-Fi HaLow network 305.

In embodiments of the present invention, STA-2 can maintain connectivity even when moving out of the existing WLAN network coverage of AP 310/Wi-Fi HaLow network 305, based on STA-2 332 detecting that it has lost connectivity and then bringing up (e.g., activating or otherwise using) a mesh interface for dynamic mesh network range extension. For example, STA-2 332 can have a mesh interface that is maintained in a deactivated state while STA-2 332 is connected to AP 310 in the example of FIG. 3A and/or when STA-2 332 is otherwise not participating in a dynamic mesh network while connected to the AP 310. In some aspects, STA-2 332 can activate its mesh interface based on detecting lost connectivity with the AP 310 corresponding to the Received Signal Strength Index (RSSI) of communications between the STA-2 332 and the AP 310 falling below a configured threshold, etc.

In one illustrative example, after detecting the WLAN connectivity loss and bringing up its mesh interface, STA-2 332 can then issue (e.g., transmit) a probe request through its mesh interface. The probe request using the mesh interface of STA-2 332 can be a broadcast transmission to notify of a need (e.g., a request from STA-2 332) for network connectivity to other peer stations within range (e.g., any peer stations or other nodes that receive the probe request that is broadcast by STA-2 332).

For example, in FIG. 3B, STA-2 332 has moved out of coverage and beyond the range of AP 310 of Wi-Fi HaLow network 305, and may broadcast a probe request through its mesh interface in response to STA-2 332 determining it has lost connectivity to AP 310. The two stations, STA-1 331 and STA-3 333, physically located close to STA-2 332 can receive the probe request from STA-2 332, and in response are each configured to bring up their own respective mesh interfaces to transmit probe responses to STA-2 332. Mesh network connectivity can then be established based on the exchange of the probe request from the mesh interface of STA-2 332 and the probe responses from the mesh interfaces of STA-1 331 and STA-3 333. For example, the probe responses using the respective mesh interfaces of STA-1 331 and STA-3 333 can be used to offer connectivity from STA-1 331 and STA-3 333 to the out-of-coverage STA-2 332 in response to the probe request.

A dynamic mesh network (e.g., the Wi-Fi dynamic mesh network 350 of FIG. 3B) can then be established between stations STA-1 331, STA-2 332, and STA-3 333 to effectively extend the Wi-Fi HaLow network 305 coverage area. STA-2 332 can still connect to and communicate with the Wi-Fi HaLow AP 310 despite STA-2 332 being out of coverage and no longer having a direct connection to the AP 310. In particular, STA-2 332 is able to connect to and communicate with the AP 310 through the dynamic mesh network 350 range extension provided by the mesh links between STA-2 332 and one or more (or both) of STA-1 331 and/or STA-3 333. For example, STA-1 331 and STA-3 333 have direct or indirect connections to the STA-2 332 via the dynamic mesh network 350, and can relay communications to and from the Wi-Fi HaLow network 305 via the respective direct connections between AP 310 and STA-1 331 and STA-3 333, even when STA-2 332 has moved out of the network 305 coverage. Once STA-2 332 moves back into the coverage range of the AP 305 and/or the Wi-Fi HaLow network 305, STA-2 332 can turn off the mesh interface and continue (e.g., resume) to connect and communicate directly with the AP 310 using the Wi-Fi HaLow interface that is also included in and implemented by the STA-2 332 in addition to the mesh interface described above.

Advantages of the disclosed dynamic mesh extension technique for STAs include intuitively helping in extending the coverage range of the BSS network 305 by allowing infrastructure STAs (e.g., STAs communicating with an AP of a BSS network, etc.) to dynamically offer a mesh connection to STAs that may have moved out of or are otherwise beyond the coverage range of the BSS network. The dynamic mesh extension techniques also provide the flexibility of STAs switching to the mesh interfaces when the STA determines that its direct connection to the infrastructure AP is a weak signal strength link and/or when the STA determines that it has lost connection with the infrastructure AP. The impact of having a weak RSSI STA in a network on the overall network performance can thus be avoided based on configuring the STAs to activate their mesh interface dynamically to transmit a probe request for one or more peer STA nodes to activate their mesh interfaces to provide mesh connections (e.g., the dynamic mesh network 350 of FIG. 3B) to the STA. Once the mesh connection is activated, the STAs of the mesh network that are also connected to the Wi-Fi BSS network 305 (e.g., STA-1 331, STA-3 333) can allow peering from the out-of-range STA(s) of the mesh network 350 that are not also connected to the Wi-Fi BSS network 305 (e.g., STA-2 332), to thereby provide out-of-range STAs with connectivity over two or more hops to the AP 310. STAs that have enabled their mesh interface to participate in a dynamic mesh network 350 for range extension when out of range of direct connection to the AP 310 and Wi-Fi BSS network 305 can be configured to disable the mesh connection once the STA has moved back within the range of the AP 310.

### Dynamic S1G Mesh Network - AP Extensions

Mesh networks may often be used to extend network coverage, and may be utilized as backhaul links between two BSSs (e.g., a mesh backhaul between a first BSS and a second BSS) where wiring (e.g., wired connectivity between the first and second BSS) is not possible, practical, or otherwise desired. In some embodiments, a mesh gate (also referred to as a mesh gate node) can be configured to selectively function both as an AP for an S1G Wi-Fi network and to function as a mesh node for a mesh network. The use of a mesh gate node configured as both an AP of an S1G Wi-Fi network and a mesh node of a mesh network can be used to extend the range of a Mesh Basic Service Set (MBSS) associated with the mesh network. In some aspects and as used herein, a mesh gate can also be referred to interchangeably as a "co-located AP". Embodiments of the co-located AP can be configured to monitor regular S1G client probe requests through the mesh interface and to bring up the AP interface only when the S1G client sends out probe requests. For example, a co-located AP can be configured to bring up or activate its AP interface in response to the co-located AP receiving a probe request from an S1G client (e.g., such as an infrastructure STA),

The mesh gate enables an AP interface for infrastructure STAs in a BSS to establish connection with the mesh gate, while the mesh gate simultaneously may use its mesh interface to connect to one or more mesh nodes or mesh STAs in the MBSS. Accordingly, the mesh gate can bridge between the STAs in the BSS and the mesh nodes in the MBSS, based on the mesh gate providing interconnectivity between its AP interface and its mesh interface. In some aspects, stations in the BSS can reach mesh stations in the MBSS via the mesh gate, and vice versa. In some examples, mesh gates or portals may typically be marked as root mesh STAs. In such examples, the mesh gate can announce its presence using mesh action frames with Root Announcement (RANN) flags or path request elements. All other mesh stations in the network respond to these mesh action frames and build paths to the mesh gate. The mesh action frames are sent at a RANN interval, where the RANN interval is a configurable parameter.

In addition to mesh action frames, the mesh gate can additionally send beacons (e.g., beacon frames) according to a beacon interval, where the beacon interval is also a configurable parameter. Various embodiments of the beacons sent from a mesh gate to mesh nodes in the MBSS include regular beacons, probe requests, and integrated beacons; more detailed descriptions related to these beacons and alternatives for mesh S1G networks will be described in greater detail below. As noted previously, a mesh gate can be implemented as a mesh node or mesh STA that includes two different communication or networking interfaces, with a first interface provided for AP communications (e.g., the AP interface) and another provided for mesh STA communications (e.g., the mesh interface). Both the mesh and the AP interfaces may transmit beacons at default configured intervals to advertise the presence of the mesh gate in the mesh mode and the AP mode, respectively. For example, a first beacon type may be transmitted approximately every 100ms from the AP interface of the mesh gate node, and a second beacon type may be transmitted approximately every 1000ms from the mesh STA interface of the mesh gate node. This dual beacon activity, when transmitted at regular intervals, can be noisy in examples where there are multiple mesh nodes in the network, especially in an S1G network, as beacons consume significant amounts of bandwidth due to the lower MCS data rate used for the beacons (e.g., 0.3 Mbps with long guard interval). Furthermore, frequent beacon transmission can reduce the battery life for battery-powered devices.

A mesh gate may usually have both mesh STA and AP functionalities (e.g., both mesh and AP interfaces/modes) running once the mesh gate is powered on. As contemplated herein, providing control to selectively enable or disable (e.g., turn on or turn off, respectively) the different interfaces and modes of the mesh gate node can improve the functionality of the mesh gate node and associated network connections. For example, the mesh gate node can be configured with control of when the AP mode is turned on, which can significantly reduce the airtime associated with beacon transmission on the AP interface of the mesh gate (which may otherwise occur every 100ms when the AP interface of the mesh gate is active). Disabling, deactivating, or turning off the AP interface of the mesh gate node when it is not needed can additionally be seen to reduce the traffic in the network, again based on the AP interface beacons no longer being sent as network traffic every 100ms.

In some aspects, a user space application of the mesh gate can be configured and used to monitor the traffic at the mesh gate, and can turn on the mesh gate AP mode and activate the AP interface as soon as a probe request is received (or otherwise detected by the user space application for traffic monitoring at the mesh gate) from an infrastructure STA. Similarly, the user space application of the mesh gate can be configured and used to turn off the AP mode and AP interface when the number of connected clients on the AP interface of the mesh gate reaches zero (e.g., when the AP interface of the mesh gate is currently unused). The airtime can be further reduced by monitoring the available mesh nodes in the vicinity of a mesh station, for example, the mesh gate can increase the beacon interval or stop beaconing when none of the nearby nodes are available in the network. In another example, the mesh gate can resume beaconing after a mesh station is reached from the mesh gate by means of a beacon or probe request. In some embodiments, a change in beacon interval used by the mesh gate can be advertised in the beacon-compatibility IE of the S1G DTIM beacon frame transmitted by the mesh gate during beaconing operations.

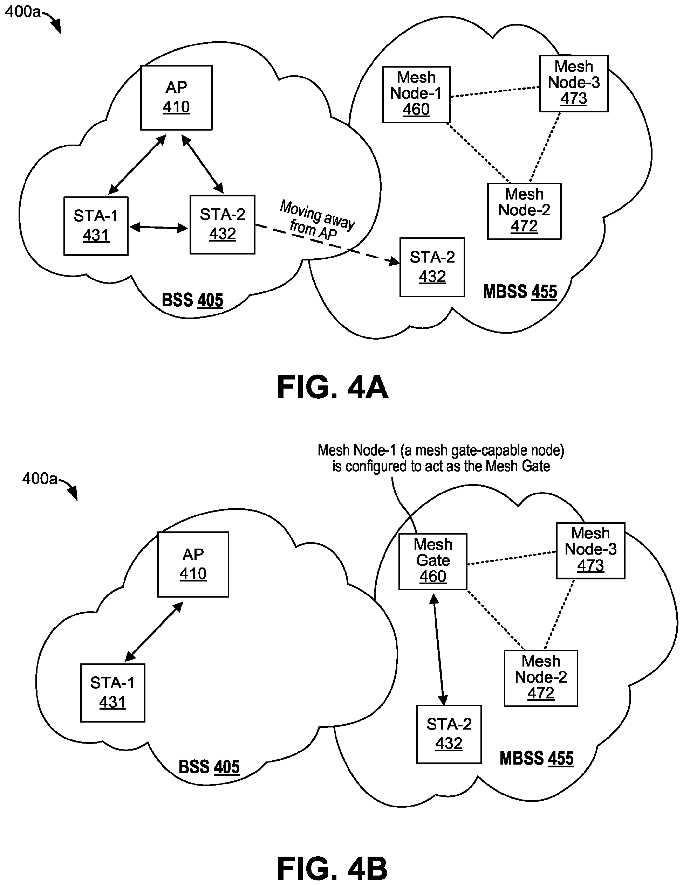

FIGS. 4A and 4B illustrate an example of a dynamic mesh network including a mesh gate node configured to connect with a BSS of a Wi-Fi WLAN via an AP interface and AP mode of the mesh gate node, and to connect with an MBSS of a mesh network via a mesh interface and mesh mode of the mesh gate node. In particular, FIG. 4A depicts an example network configuration 400a where a mesh node-1 460 participates only in the MBSS 455 of the mesh network (e.g., with the AP interface of mesh node-1 460 turned off), and FIG. 4B depicts an example network configuration 400b where mesh node-1 460 activates its AP interface to participate in both the MBSS 455 of the mesh network and the BSS 405 of the Wi-Fi network. In some aspects, the MBSS 455 can be an example of a dynamic mesh network including one or more mesh gates that are implemented as a mesh node or mesh STA that is also capable of turning on an AP mode/interface to connect to an infrastructure STA (e.g., mobile device, etc.)

Initially, as depicted in FIG. 4A, the BSS 405 network has two infrastructure stations, STA-1 431 and STA-2 432, each of which are connected to an AP 410 of the BSS 405. The MBSS 455 network has three mesh stations (e.g., mesh nodes, one or more (or all) of which can be mesh gate nodes with both an AP interface and a mesh interface), shown here as Mesh Node-1 460, Mesh Node-2 472, and Mesh Node-3 473. Collectively, the mesh nodes 460, 472, 473 of the MBSS 455 form a mesh network.

Between the example configuration 400a of FIG. 4A and the example configuration 400b of FIG. 4B, STA-2 432 moves away from the AP 410 of the BSS 405 and towards Mesh Node-1 460 in the MBSS 455. STA-2 432 loses connections with the AP 410 when STA-2 432 moves out of the range of the BSS 405, and starts searching for a new AP with which to establish a connection by a scanning process. In one embodiment, STA-2 432 may move away from AP 410 or otherwise lose connection with the BSS 405, and in response STA-2 432 may send a probe request to search for a new connection (e.g., as described with respect to the probe request transmitted in the example above of FIGS. 3A-3B, etc.).

Because STA-2 432 has moved towards the MBSS 455 and its constituent mesh nodes, Mesh Node-1 460 can receive the probe request from STA-2 432 (e.g., based on physical proximity or range between Mesh Node-1 460 and STA-2 432 in the positioning shown in FIG. 4B). In some aspects, Mesh Node-1 460 can determine whether the received probe request has a good signal strength (e.g., signal strength, RSSI, etc., greater than or equal to a configured threshold, etc.). If the probe request is received with a signal strength below the configured threshold, Mesh Node-1 460 may ignore the probe request and/or take no action.

Based on receiving the probe request from STA-2 432 with an RSSI or signal strength above the configured threshold, Mesh Node-1 460 can be configured to become a mesh gate by activating its AP mode/AP interface that was previously left inactivated while Mesh Node-1 460 was in the example network configuration 400a of FIG. 4A. Mesh Node-1 0 can additionally respond to the probe request from STA-2 432 with a corresponding probe response.

In the example of FIGS. 4A-4B, the AP interface of Mesh Node-1 460 was originally off (e.g., when Mesh Node-1 460 participated only in the MBSS 455, as shown in FIG. 4A). In some embodiments, the Mesh Node-1 460 may therefore receive the probe request from STA-2 432 through the mesh interface of Mesh Node-1 460. As noted above, the AP interface is only turned on when Mesh Node-1 460 decides to activate the AP mode and acts as (e.g., configure or reconfigure itself as) a Mesh Gate.

In some embodiments, both the AP interface and the mesh interface of Mesh Node-1 460 may be on at the time that STA-2 432 transmits the probe request in FIG. 4B. For example, the Mesh Node-1 460 may already have both the AP interface and the mesh interface activated based on the Mesh Node-1 460 having previously received a probe request from a different STA (not shown) that caused Mesh Node-1 460 to activate the AP interface. In this example, Mesh Node-1 460 can receive the probe request from STA-2 432 through the AP interface.

Upon receiving a probe response from the mesh gate (e.g., Mesh Node-1 460 after receiving the probe request from STA-2 432 and activating its AP interface if needed), STA-2 432 may check if the mesh gate 460 has the same capabilities, and then starts an association process to connect with the mesh gate 460. The mesh gate 460 may also announce its presence to other peers in the mesh network associated with MBSS 455 using Root Announcement (RANN) or path request elements.

For example, the mesh gate 460 can use the RANN or path request elements to announce its presence as a mesh gate to the remaining mesh node peers on the MBSS 455 (e.g., Mesh Node-2 472, Mesh Node-3 473, etc.), thereby indicating to the remaining mesh peers Mesh Node-2 472 and Mesh Node-3 473 that the mesh gate 460 (e.g., Mesh Node-1 460 with both the AP interface and the mesh interface activated) has access to the DS beyond the MBSS,. Based on the announcement(s) from the mesh gate 460, both Mesh Node-2 472 and Mesh Node-3 473 can determine that they may reach STA-2 432 via their existing mesh links (e.g., existing connections of MBSS 455) to the mesh gate 460. Benefits of dynamically activating the AP mode/AP interface in a mesh station (e.g., Mesh Node-1 460) can include helping in optimizing medium overhead and saving precious airtime by avoiding unwanted beacons from the AP interface of the mesh station.

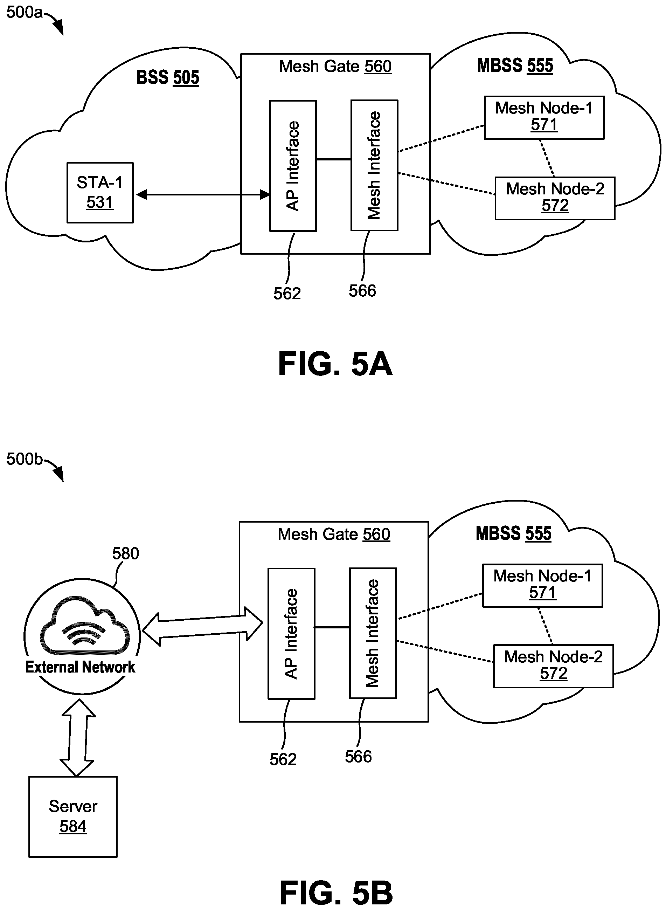

In some embodiments, a mesh network can include one or more co-located APs (e.g., mesh gates, mesh gate nodes, etc.) capable of supporting both mesh and AP functionalities simultaneously. For example, FIGS. 5A-7 illustrates various examples of mesh networks that include one or more co-located APs/mesh gates.

In particular, FIG. 5A illustrates an example network configuration 500a corresponding to a mesh gate node 560 (e.g., co-located AP) that includes an AP interface 562 for communications between the mesh gate node 560 and one or more STAs (e.g., STA 531) of a Wi-Fi WLAN BSS 505, and that further includes a mesh interface 566 for communications with a one or more mesh nodes (e.g., Mesh Node-1 571, Mesh Node-2 572) of a mesh network MBSS 555. Fig. 5B illustrates a similar example, where the mesh gate node 560 uses the AP interface 562 to provide connectivity between the MBSS 555 and an external network 580/remote server 584 (while in the example of FIG. 5A, the mesh gate node 560 uses the AP interface 562 to provide connectivity between the MBSS 555 and the BSS 505/STA-1 531).

In some embodiments, the mesh gate 560 (with AP interface 562 and mesh interface 566) of FIGS. 5A and 5B can be the same as or similar to the mesh node used to implement STA-1 331 and/or STA-3 333 of FIGS. 3A and 3B; can be the same as or similar to the Mesh Node-1 460 of FIGS. 4A and 4B; can be the same as or similar to one or more of the STAs 331-337 of FIGS. 3A and 3B; can be the same as or similar to one or more of STA-1 431, STA-2 432, Mesh Node-1 460, Mesh Node-2 472, Mesh Node-3 473, etc., of FIGS. 4A and 4B; etc.

In some aspects, Mesh Node-1 571 and Mesh Node-2 572 of the MBSS 555 can connect to and communicate with the mesh gate 560 via the mesh interface 566, and utilize the mesh gate 560 as an additional (e.g., third) mesh node participant in the mesh network corresponding to MBSS 555. Simultaneously, infrastructure STA-1 531 can connect to and communicate with the mesh gate 560 via the AP interface 562, and utilizes the Mesh Gate 560 as an AP participant in the Wi-Fi- WLAN BSS network 505. In the simultaneous mode of operation for the AP interface 562 and the mesh interface 566 of the mesh gate 560, the mesh gate 560 can pass communications between the AP interface 562 and the mesh interface 566, and therefore can bridge connectivity between devices of the Wi-Fi WLAN BSS 505 and mesh nodes of the mesh network MBSS 555.

In some embodiments, a mesh gate or co-located AP can be used to provide mesh portal functionality for a mesh network. For example, in FIG. 5B, the mesh gate node 560 can be configured as a mesh portal between the mesh network MBSS 555 (and mesh nodes 571, 572 thereof) and an external network 580 (e.g., such as the internet) with one or more remote servers 584 or other devices connected to the external network 580. For example, acting as a mesh portal, the mesh gate 460 communicates with two mesh nodes 571, 572 in the mesh network MBSS 555 through the mesh interface 566, and at the same time, the mesh gate 560 implements the mesh portal functionality to enable the mesh nodes 571, 572 to communicate with the external network 580/remote server 584.

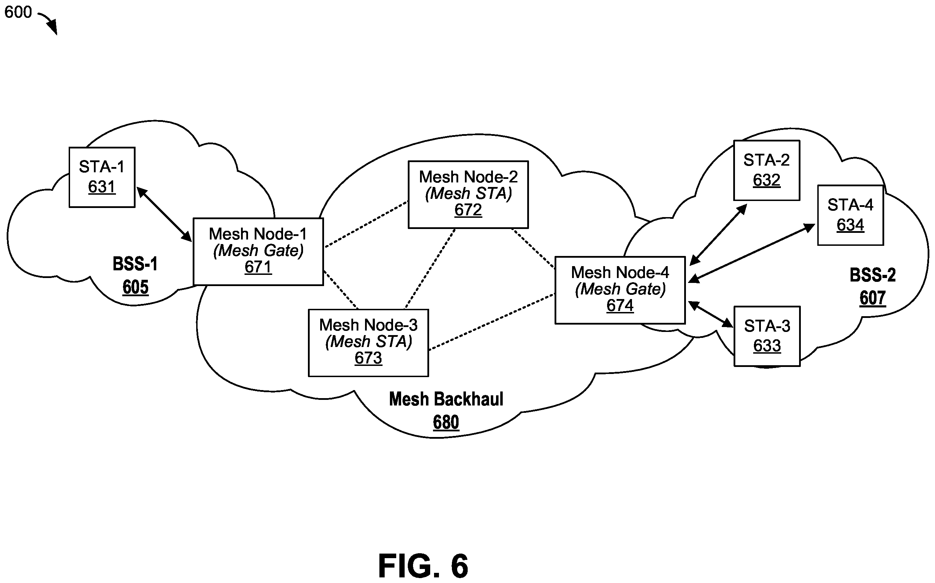

FIG. 6 illustrates an example of a mesh backhaul network 680 that includes multiple mesh nodes and mesh gate nodes for providing mesh backhaul connectivity between a first Wi-Fi WLAN BSS-1 605 connected to a first mesh gate node 671 of the mesh backhaul network 680 and a second Wi-Fi WLAN BSS-2 607 connected to a second mesh gate node 674 of the mesh backhaul network 680, in accordance with some examples. In some aspects, at least the Mesh Node-1 671 and the Mesh Node-4 674 can be provided as mesh nodes that are capable of simultaneously utilizing (as well as utilizing only one of) an included mesh interface and an AP interface. In some embodiments, Mesh Node-1 671 and Mesh Node-4 674 can be the same as or similar to the mesh gate node 560 of FIGS. 5A and 5B, with Mesh Node-1 671 and Mesh Node-4 674 each including a respective AP interface the same as or similar to the AP interface 562 of FIGS. 5A-B and a respective mesh interface the same as or similar to the mesh interface 566 of FIGS. 5A-B.

In some cases, each mesh node in the mesh backhaul network 680 (e.g., 671, 672, 673, and 674) can be the same as or similar to the other mesh nodes. For example, in some embodiments all four of the mesh nodes 671-674 may be mesh gate-capable nodes that each include an AP interface and a mesh interface, where Mesh Node-1 671 and Mesh Node-4 674 are configured as co-located APs/mesh gates with both their AP interface and mesh interface active, while Mesh Node-2 672 and Mesh Node-3 673 are configured as mesh nodes only (with their AP interfaces deactivated or turned off, and only their mesh interfaces active). In other example, a first subset or portion of the mesh nodes in the mesh backhaul network 680 can be mesh gate/mesh gate-capable nodes with both AP interfaces and mesh interfaces, while a second subset or portion of the mesh nodes in the mesh backhaul network 680 are non-mesh gate capable nodes and instead include only a mesh interface (e.g., do not include an AP interface). For instance, in such examples, Mesh Node-1 671 and Mesh Node-4 674 can be included in a subset of nodes of the mesh backhaul network 680 that are mesh gate capable and include both AP interfaces and mesh interfaces, while Mesh Node-2 672 and Mesh Node-3 673 are included in a second subset of nodes of the mesh backhaul network 680 that include only a mesh interface (e.g., also referred to as mesh stations (mesh STAs)).

In some embodiments, BSS-1 605 includes a first STA-1 631 that communicates with the AP interface of a mesh gate implemented by Mesh Node-1 671 of the mesh backhaul network 680 (e.g., Mesh Node-1 671 uses its AP interface to act as an AP of BSS-1 605). The second BSS-2 607 can be separate and remote (e.g., distant) from the first BSS-1 605, and can include STA-2 632, STA-3 633, and STA-4 634 that communicate with the AP interface of a mesh gate implemented by Mesh Node-4 674 of the mesh backhaul network 680.

Because the mesh gates/co-located APs provided by Mesh Node-1 671 and Mesh Node-2 674 are included in the same mesh backhaul network 680, Mesh Node-1 671 can reach Mesh Node-4 674 (and vice versa) through one or more intermediate hops over the mesh links provided by the intermediate mesh nodes 672 and 673. For example, Mesh Node-1 671 and Mesh Node-4 674 can connect to one another through the mesh backhaul 680 using one or more of the paths: [Mesh Node-1, Mesh Node-3, Mesh Node-4], [Mesh Node-1, Mesh Node-3, Mesh Node-2, Mesh Node-4], [Mesh Node-1, Mesh Node-2, Mesh Node-4], and/or [Mesh Node-1, Mesh Node-2, Mesh Node-3, Mesh Node-4], etc.

The mesh nodes 671, 674 can also be referred to as mesh gates and/or co-located APs, based on the mesh nodes 671, 674 each using their respective AP interface and mesh interface simultaneously to participate in the same mesh backhaul network 680 while also participating in a respective BSS network BSS-1 605 and BSS-2 607 (respectively). The four mesh nodes, Mesh Node 1, Mesh Node 2, Mesh Node 3, and Mesh Node 4, connect in the mesh backhaul. Mesh Node 1 is a mesh gate connecting with other mesh nodes in the mesh backhaul through a mesh interface and connecting with a station STA-1 in a first BSS network (BSS Network 1) through an AP interface. Similarly, Mesh Node 4 is a mesh gate connecting with other mesh nodes in the mesh backhaul through a mesh interface and connecting with three stations STA-2, STA-3, and STA-4 in a second BSS network (BSS Network 2) through an AP interface.

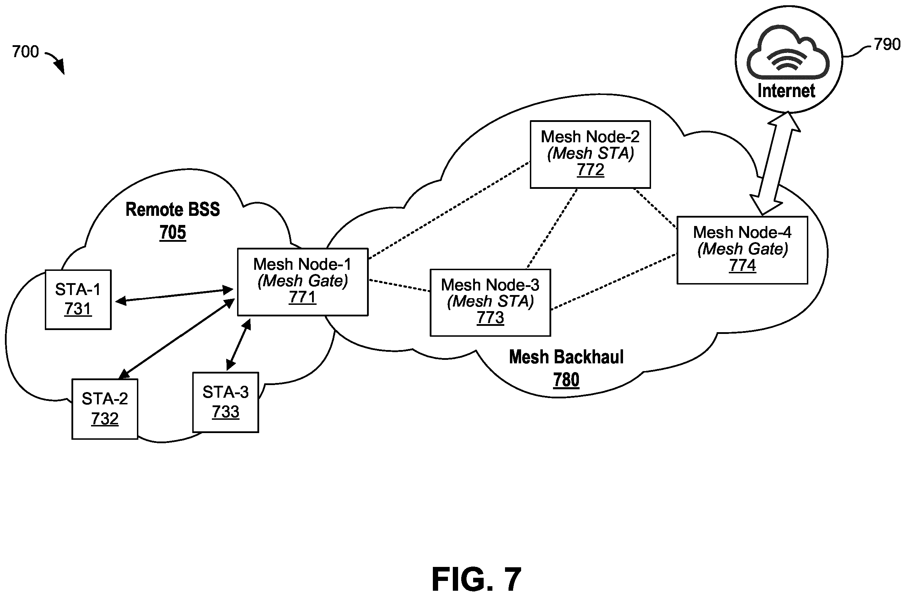

In another illustrative example, FIG. 7 depicts an example network configuration 700 of a mesh backhaul network 780 that may be the same as or similar to the mesh backhaul network 680 of FIG. 6. For example, mesh backhaul 780 can include the mesh nodes 771-774 which can be the same as or similar to the mesh nodes 671-674 of mesh backhaul 680 of FIG. 6 (respectively). In some embodiments, Mesh Node-1 711 and Mesh Node-4 774 of the mesh backhaul 780 of FIG. 7 can be configured as mesh gates/co-located APs with their mesh interface and AP interface simultaneously active, while Mesh Node-2 772 and Mesh Node-3 773 may be provided as mesh STAs that lack an AP interface (e.g., have a mesh interface only) or are provided as mesh gate-capable nodes with their AP interfaces deactivated (e.g., only their mesh interface is active).

While the example mesh backhaul 680 of FIG. 6 is used to provide mesh backhaul connectivity between the first BSS-1 605 and the second BSS-2 607, the example mesh backhaul 780 of FIG. 7 can be used for providing mesh backhaul connectivity between a remote Wi-Fi WLAN BSS 705 and an external network 790 such as the internet. Again similar to the example of FIG. 6, the mesh backhaul connectivity provided by the mesh backhaul network 780 of FIG. 7 can be implemented via respective connections to first and second mesh gate nodes 771, 774 of the mesh backhaul network 780, in accordance with some examples.

In some examples, the remote Wi-Fi WLAN BSS 705 of FIG. 7 can be the same as or similar to the BSS-1 605 or BSS-2 607 of FIG. 6, and/or any other BSS described herein and/or depicted in the examples of FIGS. 1-8D. For example, the remote BSS 705 of FIG. 7 can include a first STA-1 731, a second STA-2 732, and a third STA-3 733, each of which can communicate with an AP comprising or implemented by the AP interface of the mesh gate node 771 that is included in both the remote BSS 705 and the mesh backhaul network 780.

In one illustrative example, the first Mesh Node-1 771 can comprise a co-located AP used to implement a mesh gate to connect the mesh backhaul network 780 to the infrastructure STAs 731-733 of the remote BSS 705; and the Mesh Node-4 774 can comprise another co-located AP used to implement a mesh portal to connect the mesh backhaul network 780 to the internet 790 or other external network. The mesh gate (e.g., Mesh Node-1 771) and the mesh portal (e.g., Mesh Node-4 774) connect with other mesh nodes (e.g., Mesh Node-2 772 and Mesh Node-3 773) in the mesh backhaul network 780, using a respective set of mesh links between pairs of mesh nodes. The mesh gate, Mesh Node-1 771, serves as an AP to provide wireless connection for the stations, STA-1 731, STA-2 732, and STA-3 733, in the remote BSS 705. The mesh portal, Mesh Node-4 774, connects to the Internet 790 through its AP interface.

In some aspects, the co-located APs (e.g., mesh gates, mesh gate nodes, mesh gate-capable nodes, etc.) of the examples described above with respect to FIGS. 3A-7 can selectively and dynamically determine whether to simultaneously have both their AP and mesh interfaces active. In examples where a co-located AP/mesh gate is configured with both AP and mesh interfaces as currently active, both interfaces can send one beacon each beacon interval. For example, the AP interface of Mesh Node-1 771 can send a first beacon on the remote BSS 705 at a first interval (e.g., every 100ms, etc.) and the mesh interface of Mesh Node-1 771 may separately send a second beacon on the mesh backhaul network 780 at a second interval (e.g., every 1000ms, etc.).

Separate beaconing by the AP interface and the mesh interface of a co-located AP/mesh gate node can be seen to greatly increase the number of beacons in the air especially when there is a large set of mesh nodes in the mesh network. A beacon frame consists of mandatory fields and optional fields. The mandatory fields are those fields carrying information required for proper working of the network, where the optional fields are those Information Elements (IEs) that provide information on the support of various features in the network. To alleviate the problem of occupying too much airtime and thus improve the performance of mesh networks, in some embodiments, the co-located AP/mesh gate can be configured to performed combined beaconing, where the BSS beacons on the AP interface and the mesh beacons on the mesh interface can be combined to reduce the required beacon airtime according to an embodiment of the present invention. For example, an embodiment of the co-located AP can be configured to transmit a single integrated beacon on the air, using a configured beacon interval for the single integrated beacon shared by the BSS beacon/AP interface and the mesh beacon/mesh interface of the co-located AP. For example, the AP complies with the IEEE 802.11 ah standard which transmits the integrated beacons on a channel within the S1G frequency band. In this embodiment, the co-located AP supporting both stations in an S1G BSS and mesh nodes in a MBSS transmit integrated beacons for the stations and mesh nodes instead of separate BSS and mesh beacons. Once this integrated beacon is received by a station within the BSS or a mesh node within the MBSS, an embodiment of a receiver segregates the integrated beacon into two beacons and processes the proper one as if two separate beacons are received. The station processes the BSS beacon segregated from the integrated beacon, whereas the mesh node processes the mesh beacon segregated from the integrated beacon. This avoids a large set of changes in upper layers to process the integrated beacon sent by the co-located AP. In some embodiments, the mesh network employs Mesh Beacon Collision Avoidance (MBCA) to avoid collisions among mesh beacons of neighboring nodes. To further leverage MBCA, embodiments of multi-interface beaconing combine the regular BSS beacons with the mesh beacons to reduce the probability of possible beacon collisions. The co-located AP sends integrated beacons from both the AP and mesh interfaces to optimize the airtime.

An example of combining a mesh beacon and a BSS beacon into an integrated Mesh-AP beacon is described below. Some fields in the mesh beacon are identical to the ones in the BSS beacon, so only a single copy of these fields needs to be presented (e.g., included) in the integrated Mesh-AP beacon. The integrated beacon may also include one or more mesh-only fields for information that is included only in the mesh beacon, and one or more BSS-only fields for information that is included only in the BSS/AP beacon. In this example, the original beacon interval for mesh beacons is 1000 time units (1024 milliseconds), whereas the original beacon interval for BSS beacons is 200 time units (204.8 milliseconds), which implies that the BSS beacons are transmitted more frequently than the mesh beacons. The beacon interval is the time between two successive beacon frames transmitted by the co-located AP/mesh gate. The integrated beacon is thus transmitted at an interval of 200 units (204.8 milliseconds) to fulfill the need for the more frequently broadcasted beacons. In this example, the mesh beacon contains 5 bytes of fixed parameters and 74 bytes of tagged parameters, whereas the BSS beacon contains 5 bytes of fixed parameters and 84 bytes of tagged parameters. The resulting integrated beacon is slightly larger than the BSS beacon, which contains 5 bytes of fixed parameters and 109 bytes of tagged parameters. The co-located AP combines the mesh beacon and the BSS beacon into a single integrated beacon. This single integrated beacon will be split into two beacons in the driver of a receiver in a mesh node or a station before handing over to Linux mac80211 stack.

In some embodiments, a co-located AP operating in an S1G mesh network can turn off the AP interface thus only communicating with mesh nodes in a MBSS using the mesh interface. The co-located AP can function the same as a standard mesh node (e.g., which lacks an AP interface) in the MBSS when the co-located AP turns off the AP interface. The co-located AP, like every mesh node in the MBSS, transmits a mesh beacon at every beacon interval on an S1G channel to identify the mesh network. For example, the mesh beacon advertises the mesh ID, mesh profile, and power save state. With limited bandwidth available in the S1G spectrum, beaconing overheads consume a significant portion of the precious airtime especially when there are a large number of mesh nodes in the MBSS. The overall S1G mesh network performance in terms of throughput, latency, and packet loss is degraded due to a large number of beacon transmissions between mesh nodes. Some embodiments of the present invention further improve the performance of the S1G mesh network by modifying the beacon behavior for each mesh node. These embodiments include beaconless operation, and higher Modulation Coding Scheme (MCS) rate for beacons.

Each of the mesh nodes in an S1G Mesh Basic Service Set (MBSS) needs to broadcast a management frame to announce a presence of the mesh node in the MBSS. For example, the management frame can be a beacon that is sent periodically by the mesh node in order to synchronize with other mesh nodes in the MBSS and so that the mesh node can enable a power save mode. In some embodiments of the present invention, the mesh node can disable the power save mode or mesh power save feature (especially for those devices/mesh nodes which are AC powered), and can skip beacons when the power save mode is disabled as synchronization is not required. Liveness of the mesh nodes can be detected by keeping alive frames which are sent by mesh nodes at regular intervals (usually less than the inactivity interval). Various embodiments described in the following illustrate some possible management frames that are helpful in optimizing usage of precious S1G airtime.

### Beaconless Operation

The IEEE 802.11s mesh standard mandates every mesh node in the mesh network to transmit a beacon at every beacon interval advertising the mesh ID, mesh profile, power save state. With each mesh node beaconing in the MBSS, beaconing overhead increases significantly when the number of mesh nodes increases. A conventional mesh beacon has a size of 100 to 110 bytes, and takes approximately 3.5 milliseconds of airtime in an S1G network when using the default Modulation Coding Scheme (MCS) index value of MCS0 (i.e., 0.3Mbps). The total beacon airtime overhead for 10 mesh nodes operating in a mesh network is therefore approximately 35 msec. In cases of a 100 msec beacon interval (e.g., beacons are sent every 100ms), the total overhead associated with the 10 different mesh nodes each sending a 3.5ms airtime beacon every 100ms is roughly 35% of the available airtime along with possible collisions with other data frames (e.g., every 100ms beacon interval, 35ms or 35% of the airtime is consumed by the beaconing performed by just 10 mesh nodes).

To improve the performance of mesh networks even with a large number of nodes, a novel approach of Mesh Beaconless operation can be utilized. As the S1G spectrum has all active channels, an embodiment of mesh nodes in an S1G mesh network use active scanning for detecting the presence of the existing mesh network. For example, the mesh node sends probe requests with a wildcard mesh ID Information Element (IE) as part of the active scanning process. The mesh node can receive one or more probe responses to its probe requests.

Each mesh node in the mesh network may be configured to filter out a probe request received from a normal S1G non-mesh client if the received probe request frame does not include a mesh ID Information Element (IE). For example, a mesh node can filter out and ignore a probe request from a non-mesh client, based on the probe request not including the mesh ID IE. When ignoring non-mesh client probe requests, the mesh node that receives the probe request does not generate or transmit a probe response in reply to the probe request, thereby reducing the congestion and traffic on the network.

In some embodiments of beaconless operation, the beacons normally transmitted in an S1G mesh network are replaced with probe requests and probe responses. For instance, instead of mesh nodes using the mesh beacons to send out the same information periodically in a repeated manner, a mesh node can instead be configured to send a probe response upon receiving an explicit probe request frame from a mesh node. As network capabilities rarely change dynamically, advertising the same network capability in beacons can be avoided through the use of the probe requests and probe responses as beacon replacements for the disclosed beaconless operation on the mesh network. In some aspects, the network devices (e.g., nodes, STAs, APs, etc.) contemplated herein may be majority comprised of AC-powered devices that do not have the same power limitations as battery-powered devices that are not connected to a source of electrical mains energy. In such examples of majority AC-powered devices on the network(s), device performance (rather than device power efficiency) may be the main criteria in maintaining the network. Furthermore, by implementing this beaconless operation, the Mesh Beacon Collision Avoidance (MBCA) protocol for preventing beacon collisions is no longer required.

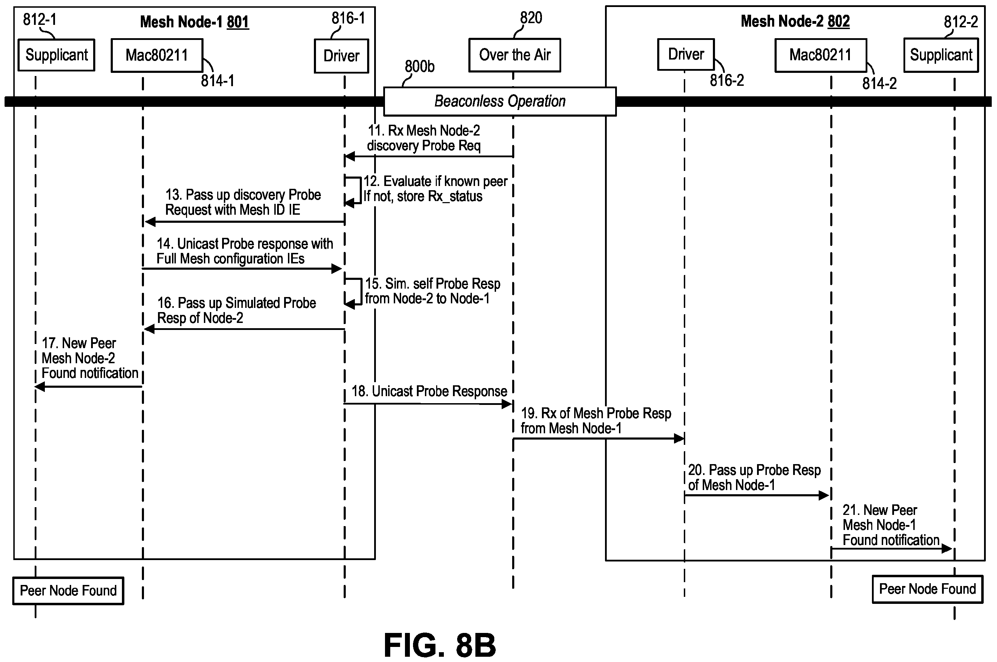

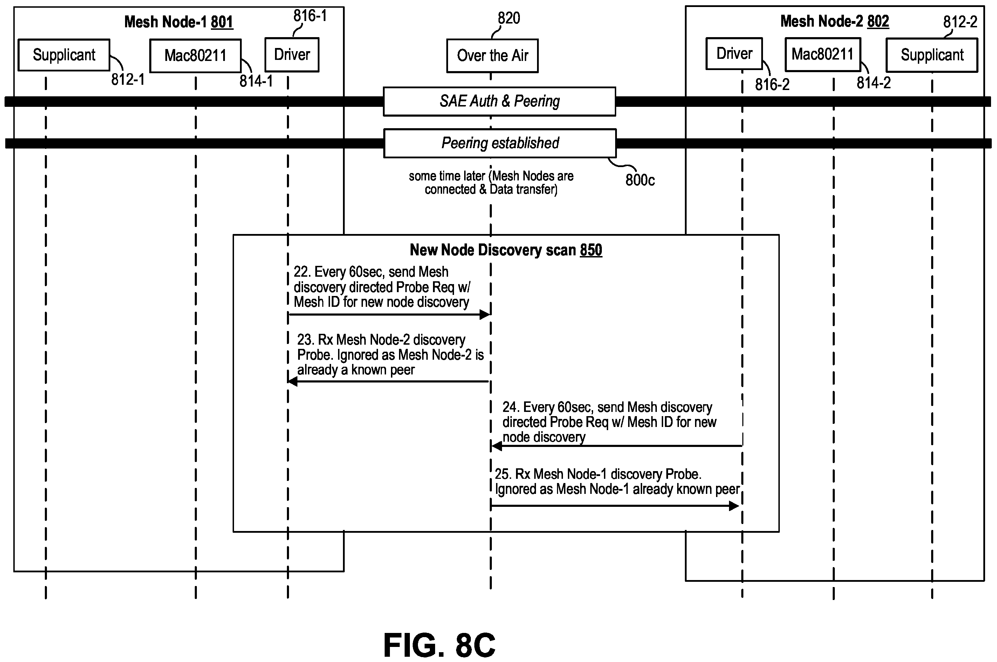

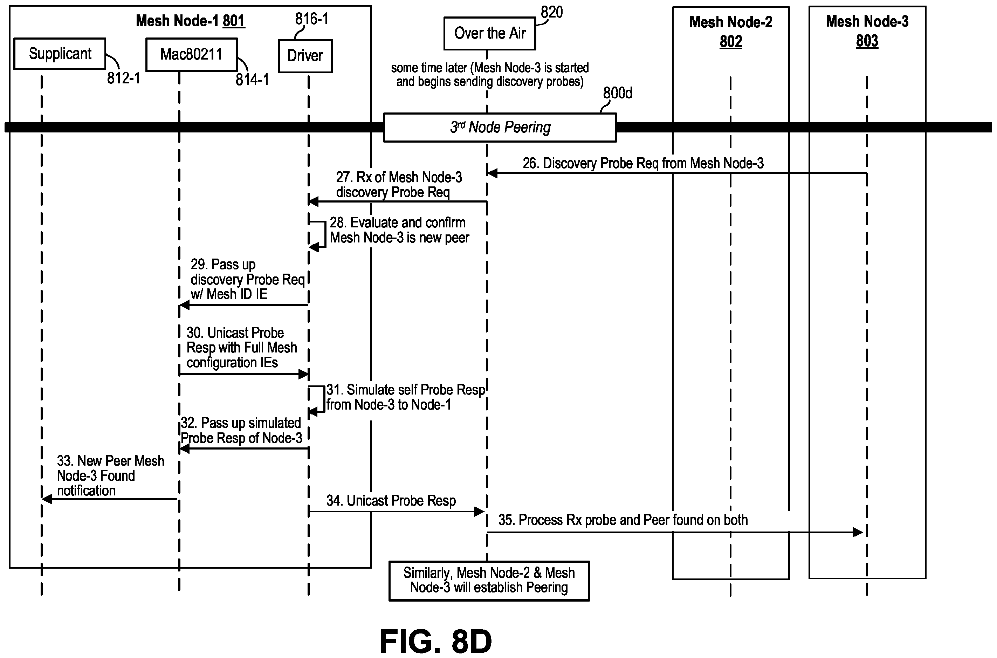

FIGS. 8A-8D depicts an example signaling diagram corresponding to a sequence of operations for the mesh beaconless mode implementation for scanning and discovery phases, according to an embodiment of the present invention. In particular, FIG. 8A is a signaling diagram depicting a discovery scan 800a phase performed between a mesh node-1 801 and a mesh node-2 802. FIG. 8B continues from after the discovery scan 800a of FIG. 8A, and illustrating a signaling diagram corresponding to a beaconless operation 800b phase again between the mesh node-1 801 and the mesh node-2 802. FIG. 8C is a signaling diagram depicting a peering established phase 800c, which can follow the beaconless operation 800b phase of FIG. 8B (and is again performed between the mesh node-1 801 and the mesh node-2 802). FIG. 8D is a signaling diagram depicting an example of a 3^{rd} node peering phase 800d, which can follow the peering established phase 800c of FIG. 8C, and can be performed by one or more (or all) of the mesh node-1 801, mesh node-2 802, and/or a third mesh node-3 803.

Mesh peering, equivalent to infrastructure association, is implemented in a supplicant of a mesh node, which relies on a mac80211 for providing the new peer notification upon receiving the probe response or beacons from neighboring mesh nodes. For example, Mesh Node-1 801 can include a supplicant component 812-1, a mac80211 component 814-1, and a driver 816-1. Similarly, Mesh Node-2 802 can include a supplicant component 812-2, a mac80211 component 814-2, and a driver 816-2. The Mesh Node-3 803 of FIG. 8D can likewise include a supplicant component, a mac80211 component, and a driver, etc., and may otherwise be the same as or similar to one or more (or both) of Mesh Node-1 801 and/or Mesh Node-2 802 or any other mesh node described herein.

The supplicant (e.g., supplicant component 812-1, 812-2) is a user space daemon to maintain the wireless connection for a mesh node, which implements Wi-Fi Protected Access (WPA) key negotiation. The mac80211 (e.g., mac80211 component 814-1, 814-2) is a framework which driver developers can use to write drivers (e.g., driver 816-1, 816-2) for SoftMAC wireless devices, where SoftMAC devices allow for a finer control of the hardware.

For example, the mac80211 (e.g., 814-1, 814-2) in a mesh STA (e.g., Mesh Node-1 801, Mesh Node-2 802) handles routing of the data packets, Root Mesh STA Mesh Gate functionality, and path finding frames. For a successful mesh peering, both the mesh peers need to have information on other peer's notification in supplicants, which means both the peers would either have received beacons or probe responses of other mesh peers. Once both the peers have the needed information, the supplicant sends mesh peering action frames such as Mesh Peer Open and Mesh Peer Confirm.

Notably, the process of mesh initial scanning is avoided in this embodiment, where a mesh node will join the network as soon as the supplicant creates and initializes a mesh interface. As shown in the discovery scan 800a signaling diagram of FIG. 8A, the supplicant 812-1 of Mesh Node-1 801 can be started and at Step 1, can start a new mesh network. At Step 2, the mac80211 component 814-1 can perform mesh network initialization. At Step 3, the supplicant 812-1 can send a COMMAND_SET_MESH_CONFIG to configure the mesh ID and beaconless mode to the driver 816-1 of Mesh Node-1 801. At Step 4, the driver 816-1 initiates a periodic discovery scan timer (e.g., a timer for discovery of directed probe requests), which can correspond to Step 5, which causes the driver 816-1 to send out a directed probe request, with the Mesh ID of Mesh Node-1 801 populated, every 5 sec until at least one peer connection is established.

Similarly, at Step 6, the supplicant 812-2 of Mesh Node-2 802 starts a new mesh network to the mac80211 component 814-2. At Step 7, the mac80211 component 814-2 can perform mesh network initialization with the driver 816-2. At Step 8, the supplicant 812-2 can sends configuration information indicative of the Mesh ID for Mesh Node-2 802 to the driver 816-2 of Mesh Node-2 802 (e.g., sends the COMMAND_SET_MESH_CONFIG with the Mesh ID of Mesh Node-2 802). At Step 9 and 10, the driver 816-2 starts a periodic timer for discovery by sending out a directed probe request with the Mesh ID of Mesh Node-2 802.

In the beaconless operation phase 800b shown in the signaling diagram of FIG. 8B, the process continues at Step 11, where the driver 816-1 of Mesh Node-1 801 receives the Mesh Node-2 discovery probe request (e.g., the directed probe request transmitted by Mesh Node-2 802 in Step 10 of the discovery scan 800a phase FIG. 8A).

If a mesh node receives a directed probe request, the mesh node can evaluate if this probe request is from a known peer with which the receiving mesh node already has an established peer connection. For example, at Step 12, the Mesh Node-1 801 and/or driver 816-1 can evaluate if the received Mesh Node-2 discovery probe request received in Step 11 is from a known peer or a new peer for mesh peering with Mesh Node-1 801.

If the directed probe request is from a new peer, at Step 13 the directed probe request will be passed up to the mac80211 component 814-1 with the Mesh ID IEs and the corresponding receiving status (e.g., Rx_status) is stored, otherwise (e.g., if the directed probe request is from an existing, already established/known mesh peer of Mesh Node-1 801) it will be dropped in the driver 816-1.

At step 14, the mac80211 component 814-1 will send down the unicast probe response with full mesh configuration IEs to the driver 816-1. Before sending out the probe response, the driver 816-1 will simulate a probe response from the peer node at Step 15. For example, in Step 15, a self probe response from Mesh Node-2 802 to Mesh Node-1 801 can be simulated by the driver 816-1 of Mesh Node-1 801 in Step 15.

At Step 16, the driver 816-1 of Mesh Node-1 801 then passes up the simulated probe response of Mesh Node-2 802 to the mac80211 component 814-1. At Step 17, the mac80211 component 814-1 sends a new peer Mesh Node-2 802 found notification to the supplicant 812-1 of Mesh Node-1 801. This is required as both the supplicants 812-1 and 812-2 will need to have a new peer notification with a probe response of the other peer mesh node. Notably, instead of sending a probe request and getting a probe response over the air 820, simulating the same probe response as if the new node sent it will prevent additional frame exchange on the over the air medium 820. This is proven to be very helpful for a consistent connection avoiding the possible collisions, especially when there are more than three mesh nodes in the network.

In Step 18, the driver 816-1 of Mesh Node-1 801 transmits a unicast probe response to Mesh Node-2 802. In Step 19, the driver 816-2 of Mesh Node-2 802 receives the mesh probe response from Mesh Node-1.

At Step 20, the driver 816-2 passes the received mesh probe response Mesh Node-1 801 to the mac80211 component 814-2 of Mesh Node-2 802. In Step 21, the mac80211 component 814-2 sends a new peer Mesh Node-1 Found notification to the supplicant 812-2 of Mesh Node-2 802. Once both the mesh nodes 801 and 802 have the probe responses and the corresponding mac80211 components 814-1 and 814-2 indicate "NEW PEER" notifications to the supplicants 812-1 and 812-2, the two mesh nodes 801 and 802 initiate an SAE authentication followed by peering with mesh peering action frames (e.g., as shown at the top of the signaling diagram of FIG. 8C).

After the SAE authentication and peering, a peering established phase 800c can be performed according to the signaling diagram of FIG. 8C, corresponding to some later time at which the mesh nodes 801 and 802 are connected as peers and perform data transfer accordingly. For instance, after initial peering is performed and established according to Steps 1-21 of the signaling diagrams shown in FIGS. 8A and 8B, a new node discovery scan 850 process can be performed according to Steps 22-25 of the signaling diagram of FIG. 8C.

For example, in Step 22, the new node discovery scan 850 process can begin by sending (via driver 816-1) a mesh discovery directed probe request with the Mesh ID of Mesh Node-1 801 for the discovery of any new neighboring mesh peers for Mesh Node-1 801. This discovery scan timer can run at an interval of 60 sec for the discovery of any new neighboring mesh peers (e.g., the Mesh discovery directed Probe Request can be sent every 60 sec by the driver 816-1 of Mesh Node-1 801).

Similarly, in Step 24, the driver 816-2 of Mesh Node-2 802 can perform the new node discovery scan 850 process by sending (via driver 816-2) a mesh discovery directed probe request with the Mesh ID of Mesh Node-2 802 for the discovery of any new neighboring mesh peers for Mesh Node-2 802. This discovery scan timer for Mesh Node-2 802 can also run at the same interval of 60 sec for the discovery of any new neighboring mesh peers 9e.g., the Mesh discovery directed Probe Request can be sent every 60 sec by the driver 816-2 of Mesh Node-2 802).

Because Mesh Node-2 802 is already a peer to Mesh Node-1 801, at Step 23 the driver 816-1 of Mesh Node-1 801 will ignore any discovery probe request received from Mesh Node-2 802 (e.g., will ignore the receipt of any discovery probe request transmitted by Mesh Node-2 802 in Step 24). Similarly, at Step 25, the driver 816-2 of Mesh Node-2 802 will ignore any discovery probe request received from Mesh Node-1 801 (e.g., will ignore the receipt of any discovery probe request transmitted by Mesh Node-1 801 in Step 22).

Some time later, a third Mesh Node-3 803 may be started and begins sending discovery probe requests that are received by one or more (or both) of Mesh Node-1 801 and/or Mesh Node-2 802. For example, as shown in the signaling diagram of FIG. 8D corresponds to the 3^{rd} node peering phase 800d, at Step 26, Mesh Node-3 803 can send a discovery probe request. At Step 27, the discovery probe request sent by Mesh Node-3 803 in Step 26 can be received by the driver 816-1 of Mesh Node-1 801.

At Step 28, driver 816-1 of Mesh Node-1 801 can evaluate the received discovery probe request from Mesh Node-3 to determine (e.g., evaluate and confirm) whether Mesh Node-3 803 is a new peer or an existing peer for Mesh Node-1 801. At Step 29, the driver 816-1 can pass up the discovery probe request from Mesh Node-3 803 with the Mesh ID IE(s) to the mac802111 component 814-1 of Mesh Node-1 801. At Step 30, the mac80211 component 814-1 can send to the driver 816-1 (both of Mesh Node-1 801) a unicast probe response with full mesh configuration IEs. At Step 31, the driver 816-1 can simulate the self probe response from Mesh Node-3 803 to Mesh Node-1 801. At Step 32, the driver 816-1 can pass up the simulated probe response simulated for Mesh Node-3 803 to the mac80211 component 814-1. At Step 33, the mac80211 component 814-1 can send a new peer mesh Found notification for Mesh Node-3 803 to the supplicant 812-1 of Mesh Node-1 801. At Step 34, the driver 816-1 of Mesh Node-1 801 can send a unicast probe response to Mesh Node-3 803, and at Step 35, the Mesh Node-3 803 can process the received unicast probe response from Mesh Node-1 801 and Step 34, with a peer Found notification then provided at both of Mesh Node-1 801 and Mesh Node-3 803. Similarly, the process can be repeated for Mesh Node-2 802 and Mesh Node-3 803 to establish peering as well.

### Higher Modulation Coding Scheme (MCS) for Beacons

The Modulation Coding Scheme (MSC) index is a value that indicates the data rate and modulation type used for transmitting information. For example, the MCS index associated with a beacon or beacon transmission indicates the data rate and modulation type used for transmitting the beacon frames. An MCS index value can be a number that represents a particular combination of modulation type and coding rate, selected from a set of predetermined options for various modulation types and coding rates.

In cases when a mesh network requires network level synchronization, all mesh nodes in the mesh network need to transmit beacons. To reduce the overhead caused by beacon transmissions, these beacons can be transmitted using a higher Modulation Coding Scheme (MCS) instead of a low MCS according to some embodiments of the present invention. For example, higher MCS index values generally correspond to higher data rates, but also require better signal quality to avoid transmission errors. Lower MCS index values generally correspond to lower data rates, and are more robust to lower signal qualities.

Conventional mesh nodes only use the lowest MCS index (e.g., MCS0) for transmitting beacons to minimize the transmission error rate. In some embodiments of the present invention, a mesh node uses a high modulation coding scheme, for example, MCS7, to transmit beacons instead of the default modulation coding scheme, which is typically the lowest modulation coding scheme, MCS0. The MCS defines how many useful bits can be transmitted per resource element, and a higher MCS conveys more useful bits per resource element than a lower MCS. According to these embodiments of transmitting beacons with a high MCS, the airtime required for beacon transmission can be reduced. In some embodiments, the MCS for broadcasting beacons is selected depending on radio link quality, where a higher MCS is used when the radio link has a better quality. The MCS defines two aspects including the modulation type and coding rate. The modulation type decides the phase and amplitude modulation for bit encoding. Some examples of the modulation type are Binary Phase Shift Keying (BPSK), Quadrature Phase Shift Keying (QPSK), 16 Quadrature Amplitude Modulation (QAM), 64 QAM, and 256 QAM. More advanced modulation types, such as 256 Quadrature Amplitude Modulation (QAM), transfer more information, but are also more susceptible to noise. The coding rate defines how many bits transfer information and how many bits are used for error correction. Higher values in the coding rate transfer more information, but there is less ability for error correction. In one embodiment, all mesh nodes in the mesh network use a predetermined MCS to transmit beacons, where the predetermined MCS is higher than the lowest MCS, i.e. MCS0. In another embodiment, each mesh node in the mesh network uses a MCS that may be different from each other for beacon transmission, where at least one mesh node uses a MCS higher than the lowest MCS. In some embodiments, a mesh node in the mesh network adaptively determines a MCS for beacon transmission. For example, the MCS for beacon transmission depends on the minimum of the last transmission MCS rates used for communication with all mesh peers.

The mesh node, mesh gate, or co-located AP in various embodiments of the present invention is capable of managing a Media Access Control (MAC) layer and a Physical (PHY) layer in accordance with at least an IEEE 802.11 (Wi-Fi) standard to transmit and receive on an S1G wireless radio channel. Some embodiments of the mesh node, mesh gate, or co-located AP include a mobile device, a personal computer, a laptop computer, an Internet of Things (IoT) device, a wearable device, an extended reality device, a video server, or a communication device on a vehicle. The mesh node, mesh gate, or co-located AP includes a Radio Frequency (RF) transmitter, an RF receiver, an antenna, one or more memory banks, input and output interfaces and communication bus. The input and output interfaces include an AP interface for communicating with one or more stations in an S1G Wi-Fi network and a mesh interface for communicating with one or more mesh nodes in a mesh network. The RF transmitter and the RF receiver are also known as a modem (modulator-demodulator), which transmits data by modulating one or more carrier wave signals to encoded digital information, as well as receives data by demodulating the signal to recreate the original digital information. Furthermore, the mesh node, mesh gate, or co-located AP includes a MAC processor, a PHY processor, and a HOST processor. These processors can be any type of Integrated Circuit (IC) including a General Processing Unit (GPU), an Application Specific Integrated Circuit (ASIC) or Reduced Instruction Set Computer - Five (RISC-V) based ICs, amongst others. The memory stores software including functions of the MAC layer. Each processor executes software to implement the functions of the respective communication/application layer. The PHY processor, in particular, includes a transmitting signal processing unit and a receiving signal processing unit and manages the interface with the wireless medium. The PHY processor operates on Physical Protocol Data Units (PPDUs) by exchanging digital samples with the radio module which comprises the RF transmitter, Digital-to-Analog Converters (DACs), the RF receiver, Analog-to-Digital Converters (ADCs) and digital filters. The MAC processor executes MAC level instructions and manages the interface between the application software and the wireless medium, through the PHY processor. The MAC processor is responsible for coordinating access to the wireless medium so that the AP and STAs in range can communicate effectively. The MAC processor adds header and tail bytes to units of data provided by the higher levels and sends them to the PHY layer for transmission. The reverse happens when receiving data from the PHY layer. If a wireless frame is received in error, the MAC processor manages the retransmission of the wireless frame. The HOST processor interfaces with the MAC layer and is responsible for running high level functionalities of the wireless communication device. The peripheral bus connects to a number of peripherals that support core functions, including timers, interrupts, radio/filters/system registers, counters, Universal Asynchronous Receiver-Transmitter (UART) and General Purpose Input Output (GPIO) interfaces and others. The PHY processor, the MAC processor, the HOST processor, the peripheral bus, memory and input/output interfaces, communicate with each other via the system bus. The memory may further store an operating system and applications. In some embodiments, the memory may store recorded information about captured frames and packets. The input/output interface unit allows for exchange of information with a user. The antenna may include a single antenna or multiple antennas.

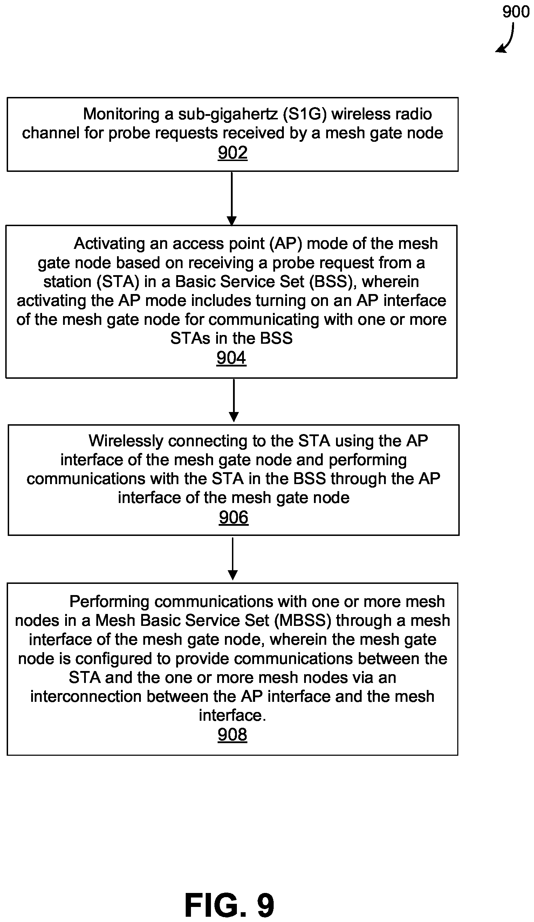

FIG. 9 is a flow diagram of an example of a process 900 for signaling by a mesh gate node including an Access Point (AP) interface for communicating with one or more Stations (STAs) in a Basic Service Set (BSS) and further including a mesh interface for communicating with one or more mesh nodes in a Mesh Basic Service Set (MBSS). For example, the mesh gate node can be the same as or similar to one or more of the mesh gate nodes of FIGS. 3A-8D described above. In some aspects, the mesh interface can be the same as or similar to the mesh interface 566 of FIGS. 5A-5B and the AP interface can be the same as or similar to the AP interface 562 of FIGS. 5A-5B. At block 902, the process 900 includes monitoring a sub-gigahertz (S1G) wireless radio channel for probe requests received by the mesh gate node. At block 904, the process 900 includes activating an AP mode of the mesh gate node based on receiving a probe request from a STA in the BSS, wherein activating the AP mode includes turning on the AP interface of the mesh gate node. At block 906, the process 900 includes wirelessly connecting to the STA using the AP interface of the mesh gate node, and performing communications with the STA in the BSS through the AP interface of the mesh gate node. At block 908, the process 900 includes performing communications with one or more mesh nodes in the MBSS through the mesh interface of the mesh gate node, wherein the mesh gate node is configured to provide communications between the STA and the one or more mesh nodes via an interconnection between the AP interface and the mesh interface.

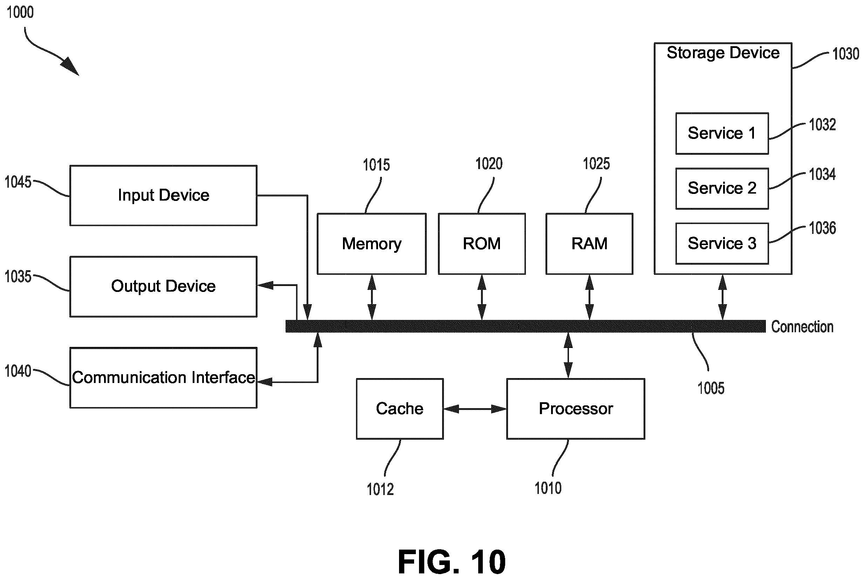

FIG. 10 illustrates a computing device architecture 1000 of a computing device which can implement one or more techniques described herein. In some examples, the computing device can include a mobile device, a wearable device, an extended reality device (e.g., a Virtual Reality (VR) device, an Augmented Reality (AR) device, or a Mixed Reality (MR) device), a personal computer, a laptop computer, a video server, a vehicle (or computing device of a vehicle), or other device. The components of computing device architecture 1000 are shown in electrical communication with each other using connection 1005, such as a bus. The computing device architecture 1000 includes a processing unit 1010 and computing device connection 1005 that couples various computing device components including computing device memory 1015, such as Read Only Memory (ROM) 1020 and Random-Access Memory (RAM) 1025, to processor 1010.

Computing device architecture 1000 can include a cache of high-speed memory connected directly with, in close proximity to, or integrated as part of processor 1010. Computing device architecture 1000 can copy data from memory 1015 and/or the storage device 1030 to cache 1012 for quick access by processor 1010. In this way, the cache can provide a performance boost that avoids processor 1010 delays while waiting for data. These and other engines can control or be configured to control processor 1010 to perform various actions. Other computing device memory 1015 may be available for use as well. Memory 1015 can include multiple different types of memory with different performance characteristics. Processor 1010 can include any general-purpose processor and a hardware or software service, such as service 1 1032, service 2 1034, and service 3 1036 stored in storage device 1030, configured to control processor 1010 as well as a special-purpose processor where software instructions are incorporated into the processor design. Processor 1010 may be a self-contained system, containing multiple cores or processors, a bus, memory controller, cache, etc. A multi-core processor may be symmetric or asymmetric.

To enable user interaction with the computing device architecture 1000, input device 1045 can represent any number of input mechanisms, such as a microphone for speech, a touch-sensitive screen for gesture or graphical input, keyboard, mouse, motion input, speech and so forth. Output device 1035 can also be one or more of a number of output mechanisms known to those of skill in the art, such as a display, projector, television, speaker device, etc. In some instances, multimodal computing devices can enable a user to provide multiple types of input to communicate with computing device architecture 1000. Communication interface 1040 can generally govern and manage the user input and computing device output. There is no restriction on operating on any particular hardware arrangement and therefore the basic features here may easily be substituted for improved hardware or firmware arrangements as they are developed.

Storage device 1030 is a non-volatile memory and can be a hard disk or other types of computer readable media which can store data that are accessible by a computer, such as magnetic cassettes, flash memory cards, solid state memory devices, digital versatile disks, cartridges, RAM, ROM, and hybrids thereof. Storage device 1030 can include services 1032, 1034, 1036 for controlling processor 1010. Other hardware or software modules or engines are contemplated. Storage device 1030 can be connected to the computing device connection 1005. In one aspect, a hardware module that performs a particular function can include the software or processor readable codes stored in a computer-readable medium in connection with the necessary hardware components, such as processor 1010, connection 1005, output device 1035, and so forth, to carry out the function.

The term "device" is not limited to one or a specific number of physical objects (such as one smartphone, one controller, one processing system and so on). As used herein, a device may be any electronic device with one or more parts that may implement at least some portions of this disclosure.

Individual aspects may be described above as a process or method which is depicted as a flowchart or a data flow diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, or a subprogram. When a process corresponds to a function, its termination can correspond to a return of the function to the calling function or the main function.

The techniques described herein may also be implemented in electronic hardware, computer software, firmware, or any combination thereof. Such techniques may be implemented in any of a variety of devices such as general purpose computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above.

The program code may be executed by a processor, which may include one or more processors, such as one or more Digital Signal Processors (DSPs), general purpose microprocessors, an Application Specific Integrated Circuits (ASICs), Field Programmable Gate Arrays (FPGAs), or other equivalent integrated or discrete logic circuitry. Such a processor may be configured to perform any of the techniques described in this disclosure. A general-purpose processor may be a microprocessor; but in the alternative, the processor may be any conventional processor, controller, microcontroller, or state machine. A processor may also be implemented as a combination of computing devices.

## Claims

1. A signaling method for a mesh gate node including an Access Point (AP) interface for communicating with one or more Stations (STAs) in a Basic Service Set (BSS) and further including a mesh interface for communicating with one or more mesh nodes in a Mesh Basic Service Set (MBSS), the signaling method comprising:
monitoring a sub-gigahertz (S1G) wireless radio channel for probe requests received by the mesh gate node;
activating an AP mode of the mesh gate node based on receiving a probe request from a STA in the BSS, wherein activating the AP mode includes turning on the AP interface of the mesh gate node;
wirelessly connecting to the STA using the AP interface of the mesh gate node;
performing communications with the STA in the BSS through the AP interface of the mesh gate node; and
performing communications with one or more mesh nodes in the MBSS through the mesh interface of the mesh gate node, wherein the mesh gate node is configured to provide communications between the STA and the one or more mesh nodes via an interconnection between the AP interface and the mesh interface.

2. The signaling method of claim 1, further comprising turning off the AP interface of the mesh gate node based on a determination that a number of connected STAs in the BSS currently associated with the mesh gate node via the AP interface is equal to zero.

3. The signaling method of claim 1, wherein the mesh gate node uses the mesh interface to perform the monitoring of the S1G wireless radio channel for probe requests, and wherein the AP interface is turned on only when the probe request is received.

4. The signaling method of claim 1, further comprising transmitting a mesh action frame by the mesh gate node, wherein the mesh action frame announces a presence of the mesh gate node with the activated AP mode in the MBSS.

5. The signaling method of claim 1, further comprising periodically transmitting, by the mesh gate node, a beacon for mesh network discovery, wherein the beacon is periodically transmitted using a beacon interval determined based on a number of mesh nodes in the MBSS.

6. The signaling method of claim 1, further comprising:
transmitting, by the mesh gate node, a beacon at a configured beacon interval; and
halting beacon transmission based on a determination that the one or more mesh nodes are not available in the MBSS.

7. The signaling method of claim 1, further comprising transmitting, by the mesh gate node, a probe request containing a mesh Information Element (IE), wherein the mesh gate node is configured to transmit the probe request instead of transmitting a beacon.

8. The signaling method of claim 1, further comprising transmitting a beacon using a Modulation Coding Scheme (MCS) index value that is higher than a lowest MCS index value associated with data transmission in the MBSS.

9. The signaling method of claim 8, wherein the MCS index value used for transmitting the beacon is adaptively determined by the mesh gate node.

10. The signaling method of claim 9, wherein the MCS index value used for transmitting the beacon is based on an MCS index value used for data transmissions by the mesh gate node.

11. The signaling method of claim 1, wherein the AP mode of the mesh gate node is activated and the AP interface of the mesh gate node is turned on based on a signal strength of the received probe request being above a configured threshold value.

12. The signaling method of claim 11, wherein wirelessly connecting to the STA further comprises transmitting a probe response through the AP interface of the mesh gate node to the STA, wherein the probe response is transmitted after turning on the AP interface in response to the received probe request.

13. The signaling method of claim 12, wherein wirelessly connecting to the STA further comprises:
connecting to the STA by an association process between the STA and the mesh gate node; and
transmitting, by the mesh gate node, an announcement indicative of a presence of the mesh gate to the one or more mesh nodes in the MBSS.

14. A mesh gate, comprising:
an Access Point (AP) interface, for communicating with one or more Stations (STAs) in a Basic Service Set (BSS);
a mesh interface, for communicating with one or more mesh nodes in a Mesh Basic Service Set (MBSS);
a processor, communicatively coupled to the AP interface and the mesh interface; and
one or more memory banks, communicatively coupled to the processor and storing processor readable codes that, when executed by the processor, is configured for:
monitoring a sub-gigahertz (S1G) wireless radio channel for probe requests;
activating an AP mode when receiving a probe request from a STA in the BSS and wirelessly connecting to the STA; and
communicating with the connected STA through the AP interface and communicating with one or more mesh nodes in the MBSS through the mesh interface, wherein the connected STA and the mesh node communicate with each other through the mesh gate.

15. A signaling method for a first station wirelessly connected to an Access Point (AP) in a Basic Service Set (BSS) on a sub-gigahertz (S1G) wireless radio channel, the signaling method comprising:
communicating with the AP through a Station (STA) interface of the first station; and
based on a determination that the first station has lost connectivity with the AP:
activating a mesh interface of the first station;
transmitting a probe request using the mesh interface of the first station, wherein the probe request is indicative of a need for network connectivity for the first station;
receiving a probe response from a second station wirelessly connected to the AP in the BSS, wherein the probe response is in response to the probe request;
establishing a dynamic mesh network between the first station and the second station based at least in part on receiving the probe response; and
communicating with the AP in the BSS, wherein the first station lacks direct connectivity to the AP in the BSS and is configured to communicate with the AP based on using the mesh interface to communicate with the second station as a relay between the first station and the AP in the BSS.

16. The signaling method of claim 15, further comprising:
reconnecting to the AP when the first station gains connectivity with the AP based on moving back within a coverage range of the AP; and
turning off the mesh interface of the first station to directly communicate with the AP through the STA interface of the first station, wherein the first station turns off the mesh interface after reconnecting to the AP.

17. A station (STA), comprising:
a STA interface configured for communication with an Access Point (AP) in a Basic Service Set (BSS);
a mesh interface configured for dynamic mesh connection with a Mesh Basic Service Set (MBSS);
a processor, communicatively coupled to the STA interface and the mesh interface; and
one or more memory banks, communicatively coupled to the processor and storing processor readable instructions that, when executed by the processor, causes the processor to perform actions comprising:
communicating with the AP through the Station (STA) interface; and
based on a determination that the STA has lost connectivity with the AP:
activating the mesh interface of the STA;
transmitting a probe request using the mesh interface of the STA, wherein the probe request is indicative of a need for network connectivity for the STA;
receiving a probe response from a second STA wirelessly connected to the AP in the BSS, wherein the probe response is in response to the probe request;
establishing a dynamic mesh network between the STA and the second station; and
communicating with the AP based on using the mesh interface of the STA to communicate with the second STA as a relay between the first STA and the AP in the BSS.
